(19) Europäisches Patentamt / European Patent Office / Office européen des brevets

(11) **EP 3 883 017 B1**

(12) **EUROPEAN PATENT SPECIFICATION**

(45) Date of publication and mention of the grant of the patent: **27.08.2025 Bulletin 2025/35**

(21) Application number: **20194076.4**

(22) Date of filing: **02.09.2020**

(51) International Patent Classification (IPC):
***H01M 4/131*** *(2010.01)* ***H01M 4/485*** *(2010.01)*
*H01M 4/36* *(2006.01)* *H01M 4/66* *(2006.01)*
*H01M 10/0567* *(2010.01)*

(52) Cooperative Patent Classification (CPC):
**H01M 4/485; H01M 4/131; H01M 4/364; H01M 4/366; H01M 4/661;** H01M 4/36; H01M 10/0567; H01M 50/204; H01M 2300/0008; H01M 2300/0068; H01M 2300/0088; Y02E 60/10

(54) **SECONDARY BATTERY, BATTERY PACK, VEHICLE, AND STATIONARY POWER SUPPLY**

SEKUNDÄRBATTERIE, BATTERIEPACK, FAHRZEUG UND STATIONÄRE STROMVERSORGUNG

BATTERIE SECONDAIRE, BLOC-BATTERIE, VÉHICULE ET ALIMENTATION ÉLECTRIQUE STATIONNAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2020 JP 2020045155**
**27.08.2020 JP 2020143723**

(43) Date of publication of application:
**22.09.2021 Bulletin 2021/38**

(73) Proprietor: **KABUSHIKI KAISHA TOSHIBA**
**Minato-ku**
**Tokyo**
**105-0023 (JP)**

(72) Inventors:
- **Sekiguchi, Yumiko**
  **Tokyo, 105-0023 (JP)**
- **Matsuno, Shinsuke**
  **Tokyo, 105-0023 (JP)**
- **Takami, Norio**
  **Tokyo, 105-0023 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 413 391** **EP-A1- 3 460 900**
**EP-A1- 3 544 096**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 883 017 B1

## Description

FIELD

The present disclosure relates generally to a secondary battery, a battery pack, a vehicle, and a stationary power supply.

BACKGROUND

A nonaqueous electrolyte battery, particularly, a lithium secondary battery using a carbon material or lithium titanium oxide as a negative electrode active material and a layered oxide containing nickel, cobalt, and manganese as positive electrode active materials has already been put into practical use as a power supply in a broad field. The form of such a nonaqueous electrolyte battery widely ranges from a small battery for various kinds of electronic devices to a large battery for an electric automobile. These lithium secondary batteries use, as the electrolytic solution, a nonaqueous organic solvent containing ethylene carbonate or methyl ethyl carbonate, unlike a nickel hydrogen battery or a lead storage battery. Electrolytic solutions using these solvents have high resistance to oxidation and high resistance to reduction as compared to an aqueous electrolyte solution, and electrolysis of the solvents hardly occurs. For this reason, a nonaqueous lithium secondary battery can implement a high electromotive force of 2 to 4.5 V.

On the other hand, since many organic solvents are combustible, the safety of a secondary battery using an organic solvent readily becomes lower than that of a secondary battery using an aqueous solution in principle. Although various measures are taken to improve the safety of a lithium secondary battery using an electrolytic solution containing an organic solvent, they are not necessarily enough. In addition, a nonaqueous lithium secondary battery requires a dry environment in its manufacturing process, and the manufacturing cost inevitably rises. Furthermore, since an electrolytic solution containing an organic solvent is poor in conductivity, the internal resistance of the nonaqueous lithium secondary battery readily becomes high. These problems are great disadvantages for a large storage battery used in an electronic automobile, a hybrid electronic automobile, or an electric power storage for which the battery safety and the battery cost are of importance.

A secondary battery using an aqueous electrolyte has been proposed to solve problems of a non-aqueous secondary battery. The secondary battery has, however, suffered from instability of operations since an active material can easily separate from a current collector, due to electrolysis of the aqueous electrolyte, leaving problems to be solved before charge-and-discharge can proceed at satisfactory levels. For satisfactory charge-and-discharge when using the aqueous electrolyte, it is necessary to limit a potential range, over which the battery is charged and discharged, within a potential range in which water contained as a solvent will not be electrolyzed. The aqueous solvent can be prevented from being electrolyzed, by using lithium manganese oxide as a positive electrode active material, and lithium vanadium oxide as a negative electrode active material. Such a combination might attain an electromotive force of 1 to 1.5 V or around, but is less likely to achieve an energy density enough for use as a battery.

Another possible combination may be lithium manganese oxide used as the positive electrode active material, and lithium titanium oxide such as $LiTi_2O_4$, $Li_4Ti_5O_{12}$ as the negative electrode active material, which can theoretically attain an electromotive force of 2.6 to 2.7 V or around, and can yield an attractive battery in terms of energy density. A non-aqueous lithium ion battery that employs such a combination of positive and negative electrode materials has succeeded in obtaining excellent life factor, and has already been put into practical use.

However in the aqueous electrolyte, insertion/extraction potential of lithium of the lithium titanium oxide occurs at a potential of approximately 1.5 V (vs. $Li/Li^+$) relative to lithium potential, and this is likely to electrolyze the aqueous electrolyte. In particular, the negative electrode can vigorously produce hydrogen, due to electrolysis that occurs on the surface of the negative electrode current collector or a metal outer container electrically connected to the negative electrode, which could easily separate the active material from the current collector. Such a battery has therefore suffered from unstable operations, making the battery incapable of satisfying charge-and-discharge.

Furthermore, EP 3 544 096 A1 relates to a secondary battery including an aqueous electrolyte. A compound containing an element A is present on at least a part of the surface of the negative electrode. The element A is at least one selected from the group consisting of Hg, Pb, Zn, and Bi. According to scanning electron microscopy, a region where the compound containing the element A is present accounts for 50% or more of the surface of the negative electrode.

In EP 3 460 900 A1, a secondary battery is described which includes an aqueous electrolyte containing alkali metal ions. The aqueous electrolyte contains an organic compound containing a carboxyl group or carboxylate group and a hydroxyl group and at least 5 carbon atoms. The pH of the aqueous electrolyte is 0 or less. The ratio of the weight of the organic compound to the weight of the aqueous electrolyte is within a range of 0.01% by weight to 6.5% by weight.

EP 3 413 391 A1 is concerned with a secondary battery containing an aqueous Li-containing electrolyte. The negative electrode includes titanium-containing oxide and at least one kind of element selected from the group consisting of B, P, Al, La, Zr, Ge, Zn, Sn, Ga, Pb, In, Bi, and Tl. According to an Example, a secondary battery contains a Ti foil as the

negative electrode, lithium titanium oxide as the negative electrode active material and a Zn-containing aqueous electrolyte.

BRIEF DESCRIPTION OF THE DRAWINGS

FIG. 1 is a cross-sectional view schematically illustrating an exemplary negative electrode included in a secondary battery according to a first approach;
FIG. 2 is a cross-sectional view schematically illustrating another exemplary negative electrode included in the secondary battery according to the first approach;
FIG. 3 is an overall cross-sectional view illustrating an exemplary secondary battery according to the first approach;
FIG. 4 is a cross-sectional view taken along line IV-IV in the secondary battery illustrated in FIG. 3;
FIG. 5 is an overall partial cutaway perspective view illustrating another exemplary secondary battery according to the first approach;
FIG. 6 is a cross-sectional view enlarging part B of the secondary battery illustrated in FIG. 5;
FIG. 7 is an overall cross-sectional view illustrating an exemplary battery module according to the first approach;
FIG. 8 is an overall exploded perspective view illustrating an exemplary battery pack according to a second approach;
FIG. 9 is a block diagram illustrating an exemplary electrical circuit of the battery pack illustrated in FIG. 8;
FIG. 10 is an overall cross-sectional view illustrating an exemplary vehicle according to a third approach; and
FIG. 11 is a block diagram illustrating an exemplary system that includes a stationary power supply according to a fourth approach.

DETAILED DESCRIPTION

The present invention is a secondary battery according to independent claim 1, a battery pack according to claim 6, a vehicle according to claim 9 and a stationary power supply according to claim 10. Preferred embodiments are as defined in the dependent claims.

According to a first approach, a secondary battery is provided. The secondary battery includes a negative electrode, a positive electrode, and an aqueous electrolyte. The negative electrode includes an aluminum-containing negative electrode current collector, and a negative electrode active material-containing layer provided on the negative electrode current collector and containing a titanium-containing oxide. At least a part of the surface of the negative electrode active material-containing layer has a film containing an aluminum-containing compound. The aqueous electrolyte contains zinc ions, and a heterocyclic compound containing aromatic rings and heteroatoms. The weight ratio of zinc ions to the heterocyclic compound in the aqueous electrolyte is within the range from 0.4 to 250. The heterocyclic compound is represented by formula (A) below:
Formula (A)

[Chemical Formula 1]

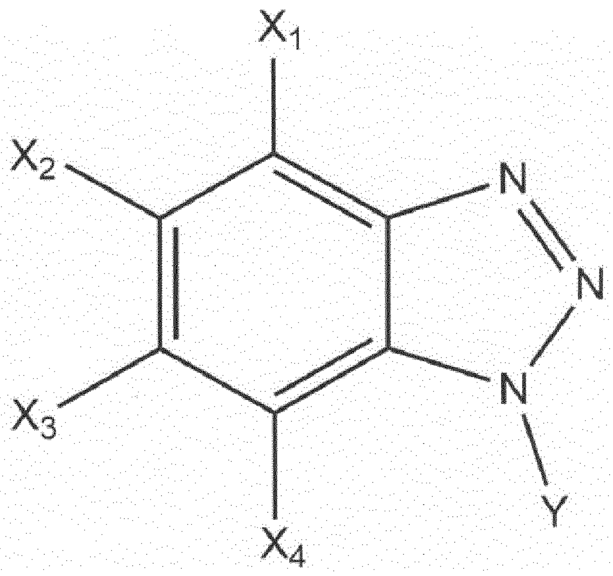

In formula (A), each of $X_1$ to $X_4$ is a hydrogen atom, alkyl group or carboxy group, and Y is a hydrogen atom or alkoxy group.

According to a second approach, a battery pack is provided. The battery pack includes the secondary battery according to the first approach.

According to a third approach, a vehicle is provided. The vehicle includes the battery pack according to the second approach.

According to the fourth approach, a stationary power supply is provided. The stationary power supply includes the battery pack according to the second approach.

According to at least one of the approaches described above, it is possible to provide a secondary battery that can demonstrate excellent charge-and-charge efficiency.

Approaches are explained below, referring to drawings. The same number is applied to common structures throughout the following approaches, and overlapped explanations are omitted. In addition, each drawing is a schematic view for encouraging explanations of the approach and understanding thereof, and thus there are some details in which a shape, a size and a ratio are different from those in a device actually used, but they can be appropriately design-changed considering the following explanations and known technology.

(First Approach)

A secondary battery according to a first approach is defined in independent claim 1.

It includes a negative electrode, a positive electrode, and an aqueous electrolyte. The negative electrode includes an aluminum-containing negative electrode current collector, and a negative electrode active material-containing layer provided on the negative electrode current collector and containing a titanium-containing oxide. At least a part of the surface of the negative electrode active material-containing layer has a film containing an aluminum-containing compound. The aqueous electrolyte contains zinc ions, and a heterocyclic compound of formula (A) containing aromatic rings and heteroatoms. The weight ratio of zinc ions to the heterocyclic compound in the aqueous electrolyte is within the range from 0.4 to 250.

A method for suppressing decomposition of water at an electrode is exemplified by a method of forming a film over the surface of the active material-containing layer. The film may be a metal film that contains a metal having a high hydrogen overvoltage. However, since the metal film tends to have a large density, that is, be dense, and the metal film may inhibit lithium ion conduction if it is formed too thick, so as to degrade the battery performance. The metal film is therefore necessarily thin, but it is relatively difficult to form a thin metal film uniformly over the surface of the active material-containing layer.

For the secondary battery that contains the aqueous electrolyte, the current collector supporting the active material-containing layer thereon, is required to have a high hydrogen overvoltage. In particular, in a negative electrode that contains a titanium-containing oxide, insertion/extraction of lithium ion occurs at approximately 1.5 V (vs. $Li/Li^+$) relative to the lithium potential, so that water is likely to be electrolyzed. A current collector including zinc or a zinc-containing compound, or a current collector with the surface plated with zinc may be used as the current collector having a high hydrogen overvoltage. Requirement has, however, arisen to use an aluminum-containing current collector, in place of the zinc-containing current collector from the viewpoint of flexibility and so forth. Since, however, the metal aluminum is likely to promote electrolysis of water on the surface thereof, so that mere replacement of the zinc-containing current collector with the aluminum-containing current collector cannot make the secondary battery operable.

The present inventors went through extensive investigations into suppression of water electrolysis on the surface of current collector even if aluminum is contained therein, and have reached the secondary battery according to the approaches.

The aqueous electrolyte, included in the secondary battery according to the approach, contains zinc ions, and a heterocyclic compound of formula (A) that includes aromatic rings and heteroatoms. In addition, the weight ratio of the zinc ions to the heterocyclic compound in the aqueous electrolyte is within the range from 0.4 to 250. The aqueous electrolyte may further contain aluminum ions. The aluminum ions may, for example, be the one eluted from an aluminum-containing current collector.

The heterocyclic compound that contains aromatic rings and heteroatoms has an electron donating part attributable to the heteroatom, and a hydrophobic part attributable to the aromatic ring. In this specification of the present application, the heterocyclic compound of formula (A) that contains aromatic rings and heteroatoms may be simply referred to as "heterocyclic compound". The heterocyclic compound can characteristically adsorb on the surface of the aluminum current collector and can form a hydrophobic film over the surface of the aluminum current collector. Once the hydrophobic film is formed, water molecules will be less likely to approach the surface of the aluminum current collector, thereby water will be suppressed from being electrolyzed.

However, for the negative electrode that contains an active material with a low working potential such as titanium-containing oxide, mere employment of the heterocyclic compound will fail in fully suppressing water decomposition on the

aluminum current collector. Thus the aqueous electrolyte included in the secondary battery according to the approach further contains zinc ions. Upon charging, such as upon the initial charging after assemblage of the secondary battery, zinc ions first deposits in the form of metal zinc, on the current collector or on the negative electrode active material-containing layer. At least a part of the thus deposited metal zinc is oxidized by oxygen contained in the aqueous electrolyte, to be converted to at least either one selected from zinc oxide and zinc hydroxide. Metal zinc or zinc compounds such as zinc oxide and zinc hydroxide can increase the hydrogen generation overvoltage at the negative electrode current collector.

Although not fully clarified, there are presumably three kinds of films, which are a zinc-containing film consists of metal zinc or zinc compound, a hydrophobic film consists of the heterocyclic compound, and a composite film having the zinc-containing film and the hydrophobic film mixed therein, are formed on the negative electrode current collector contained in the secondary battery according to the approach. All of these films can demonstrate an effect of suppressing water decomposition, through elevation of the hydrogen overvoltage. Accordingly, electrolysis of water on the aluminum-containing negative electrode current collector may be suppressed.

Such three kinds of film have, however, different levels of electrical conductivity, supposedly in a decreasing order of the zinc-containing film, the composite film having the zinc-containing film and the hydrophobic film mixed therein, and the hydrophobic film.

Excessive formation of the zinc-containing film or the hydrophobic film, among from such three types of film, will elevate resistivity of the electrode, will degrade conductivity of the electrode, and will degrade charge-and-discharge efficiency. Alternatively, zinc ion and the heterocyclic compound can form a water-insoluble complex, so that excessive content of either one of which will result in consumption of the other ingredient for formation of the complex, making it difficult to obtain an effect of film formation by the other ingredient.

With the ratio by weight of zinc ion and the heterocyclic compound contained in the aqueous electrolyte ($Zn^{2+}$/(heterocyclic compound)) is within the range from 0.4 to 250, the composite film having the zinc-containing film and the hydrophobic film mixed therein may be formed into an appropriate thickness on the surface of the current collector, making it possible to suppress the current collector from generating hydrogen. The ratio by weight is preferably in the range from 0.4 to 20, and more preferably within the range from 0.4 to 10.

Meanwhile, the negative electrode active material-containing layer has, formed on at least a part of the surface thereof, a film containing an aluminum-containing compound. The aluminum-containing compound has small exchange current density, and high hydrogen generation overvoltage. Thus, electrolysis of water at the negative electrode active material-containing layer may be suppressed. The film containing an aluminum-containing compound can be formed, as described later, as a result of deposition of aluminum ion eluted from the aluminum-containing current collector, on the negative electrode active material-containing layer.

That is, the secondary battery according to the approach can suppress electrolysis of water not only at the negative electrode current collector but also at the negative electrode active material-containing layer, thereby making it possible to suppress hydrogen from generating from all over the negative electrode, and to achieve excellent charge-and-discharge efficiency. Suppression of electrolysis of water can make a charge-and-discharge reaction of the secondary battery prevail over the electrolysis of water, and thereby high discharge capacity will be obtainable.

Hereinafter, the secondary battery according to the approach will be described in detail.

the secondary battery according to the approach can further include a separator arranged between the positive electrode and the negative electrode. The positive electrode, the negative electrode, and the separator can constitute an electrode group. The aqueous electrolyte is stored in the electrode group. The secondary battery can further include a container member which is configured to store the electrode group and the aqueous electrolyte. In addition, the secondary battery can further include a negative electrode terminal electrically connected to the negative electrode and a positive electrode terminal electrically connected to the positive electrode.

Hereinafter, the negative electrode, the positive electrode, the separator, the solid electrolyte, the aqueous electrolyte, the container member, the negative electrode terminal, and the positive electrode terminal will be described in detail.

(1) Negative Electrode

The negative electrode has the aluminum-containing negative electrode current collector, and the negative electrode active material-containing layer that contains titanium-containing oxide.

The negative electrode active material-containing layer is arranged, for example, on at least a surface of the negative electrode current collector. The negative electrode active material-containing layer may be formed on a surface of the negative electrode current collector, or may be formed on a surface and the opposite surface of the negative electrode current collector.

The negative electrode active material-containing layer may contain a conductive agent, a binder and so forth, besides the negative electrode active material. The conductive agent is added as necessary, in order to enhance the current collection performance and to suppress contact resistance between the active material and the current collector.

The binder acts to bind the active material, the conductive agent and the current collector.

At least a part of a surface of the negative electrode active material-containing layer has a film containing an aluminum-containing compound. Alternatively, the entire surface of the negative electrode active material-containing layer may be covered with the film containing an aluminum-containing compound. The aluminum-containing compound is, for example, at least one compound selected from the group consisting of oxide and hydroxide. The aluminum-containing compound is, for example, aluminum oxide and/or aluminum hydroxide and so forth, and makes up a non-metal film. The film containing an aluminum-containing compound may consist of an aluminum-containing compound, or may also contain a compound containing other element.

The film containing an aluminum-containing compound can physically exist. For example, the aluminum-containing compound can exist in the form of single crystal, or in the form of film having microcrystals aggregate therein.

The film containing an aluminum-containing compound can be a film deposited on the surface of the active material-containing layer, for example, according to a mechanism below.

First, a secondary battery having an aluminum-containing negative electrode current collector is assembled. Particles of the active material and the conductive agent used for assembling the secondary battery preferably have, on the surfaces thereof, no film containing an aluminum-containing compound. With the particles of the active material having the film containing an aluminum-containing compound preliminarily formed on the surface thereof, the film containing an aluminum-containing compound will have further deposited thereon additional aluminum-containing compound after the secondary battery is assembled, possibly making the film containing an aluminum-containing compound excessively thick. This tends to inhibit insertion/extraction of a carrier ion such as lithium ion, and is therefore not desirable.

After the secondary battery is assembled, aluminum ion starts to elute, out from the aluminum-containing negative electrode current collector, into the aqueous electrolyte. Aluminum eluted into the aqueous electrolyte then deposits onto the surface of the negative electrode active material-containing layer, for example, in the form of aluminum oxide. Also salt such as aluminum chloride may be contained in the aqueous electrolyte.

Aluminum ion eluted out from the current collector is stabilized by electrical interaction with an electron donating part included in the heterocyclic compound. That is, since the aqueous electrolyte contains the heterocyclic compound, aluminum ion may further be stabilized in the electrolyte, and thereby the film containing an aluminum-containing compound will be more likely to be formed on the surface of the negative electrode active material-containing layer.

The aqueous electrolyte is preferably acidic. Although the heterocyclic compound tends to suppress elution of aluminum ion from the current collector in the aqueous electrolyte, the acidic aqueous electrolyte can facilitate elution of aluminum ion from the current collector. As a result of oxidation of the eluted aluminum ion by oxygen in the aqueous electrolyte, the surface of the negative electrode active material-containing layer will be covered with at least the one selected from aluminum oxide and aluminum hydroxide. pH of the aqueous electrolyte is preferably smaller than 7, for example, and more preferably smaller than 5. The lower limit value of pH of the aqueous electrolyte is, for example, 4. In an exemplary case, pH of the aqueous electrolyte is adjustable to smaller than 7, by adding the heterocyclic compound. pH of the aqueous electrolyte may also be adjustable with other compound. In this specification and claims of the present application, pH of the aqueous electrolyte means a pH value at 20°C.

Amount of aluminum ion eluted from the current collector into the aqueous electrolyte is adjustable by controlling content of the heterocyclic compound and pH of the aqueous electrolyte. Alternatively, since stability of aluminum ion in the electrolyte changes by controlling the content of heterocyclic compound in the electrolyte, so that the amount of formation of the film containing an aluminum-containing compound on the surface of the negative electrode active material-containing layer is adjustable as described previously. This enables adjustment of proportion atomic concentration of aluminum atom to a total atomic concentration of titanium atom and aluminum atom ({Al atom concentration/(Al atom concentration + Ti atom concentration)} $\times$ 100) on the surface of the negative electrode active material-containing layer. In this specification of the present application, the proportion of atomic concentration of aluminum atom relative to a total atomic concentration of aluminum atom and titanium atom will also be referred to as proportion (Al/Al+Ti). The proportion can be measured by scanning electron microscope-energy dispersive X-ray spectroscopy (SEM-EDX) described later.

When the value of the proportion is small, the thickness of the film containing an aluminum-containing compound on the negative electrode active material-containing layer tends to be thin, meanwhile when the value of the proportion is large, the thickness is thick. In a case where the percentage (Al/Al+Ti) is controlled in the range from 5 atm% to 40 atm%, the negative electrode active material and the aqueous electrolyte are made less likely to contact with each other, which is desirable. Since the aluminum-containing compound has an insulating property, the percentage (Al/Al+Ti) exceeding 40 atm% would degrade the lithium ion conductivity.

Since the aluminum-containing compound starts to deposit onto the negative electrode active material-containing layer upon assemblage of the secondary battery, the aluminum-containing compound can exist also on the surface of the negative electrode active material-containing layer of the secondary battery immediately after being assembled. The deposition may further be promoted by providing standby time after assemblage of the secondary battery. The standby time is preferably 24 hours or longer for example. The deposition may further be promoted by repeating charge-and-discharge after assemblage of the secondary battery.

The film containing an aluminum-containing compound is preferably formed on at least the surface of a material having an exposed surface, out of materials that make up the negative electrode active material-containing layer. This will be explained referring to FIGS. 1 and 2. FIG. 1 is a cross-sectional view schematically illustrating an exemplary negative electrode included in the secondary battery. FIG. 2 is a cross-sectional view schematically illustrating another exemplary negative electrode included in the secondary battery.

A negative electrode 3 illustrated in FIGS. 1 and 2 includes a negative electrode current collector 3a, and a negative electrode active material-containing layer 3b formed on the negative electrode current collector 3a. The negative electrode active material-containing layer 3b includes an active material granular aggregate 51, and a film 50 containing an aluminum-containing compound. The active material granular aggregate 51 includes a first active material particle 511, and a second active material particle 512. The negative electrode active material-containing layer 3b may contain a conductive agent and a binder, although such conductive agent and the binder are not illustrated in FIGS. 1 and 2.

In FIG. 1, the film 50 containing an aluminum-containing compound is formed on the surface of a material having an exposed surface, out of the materials making up the negative electrode active material-containing layer 3b. The material making up the negative electrode active material-containing layer 3b includes, for example, an active material particle, the conductive agent and the binder. That is, the material possibly having an exposed surface includes not only the negative electrode active material, but also the conductive agent and the binder. The active material granular aggregate 51 includes at least the first active material particle 511 and the second active material particle 512. The active material granular aggregate 51 may contain a plurality of active materials, besides the first active material particle 511 and the second active material particle 512. The active material granular aggregate 51 preferably contains a plurality of active material particles adjoining each other. For example, as illustrated in FIG. 1, the first active material particle 511 and the second active material particle 512 preferably adjoin each other. In other words, the active material granular aggregate 51 preferably has no film 50 containing an aluminum-containing compound, between the adjoining active material particles. This is because the film 50 containing an aluminum-containing compound, if exists between the adjoining active material particles, would inhibit lithium ion conduction among the particles, and would tend to degrade the lithium ion conduction.

The active material granular aggregate 51 is configured by aggregating the active material particles. The negative electrode active material-containing layer 3b can include the film containing an aluminum-containing compound, formed on at least a part of the surface thereof, besides the active material granular aggregate 51, the conductive agent, and the binder. The surface of the negative electrode active material-containing layer 3b is preferably covered with the film 50 containing an aluminum-containing compound, over the entire exposed part as illustrated in FIG. 1. Alternatively at least a part of the exposed part may be covered with the film 50 containing an aluminum-containing compound.

With the structure illustrated in FIG. 1, electrolysis of water may significantly be suppressed, without inhibiting lithium ion conduction among the active material particles. Hence, the negative electrode active material-containing layer 3b can be prevented from separating from the negative electrode current collector 3a, enabling charge-and-discharge even at a negative potential of 1.5 V (vs. $Li/Li^+$) or around relative to the lithium potential. That is, with the negative electrode less likely to degrade, excellent charge-and-discharge efficiency and life factor are achievable. The negative electrode illustrated in FIG. 1 may be manufactured, for example, as a result of deposition of aluminum ion eluted, after assemblage of the secondary battery, from the current collector onto the surface of the negative electrode active material-containing layer, as described above.

The negative electrode 3 illustrated in FIG. 2 has a structure same as the negative electrode 3 illustrated in FIG. 1, except that the film 50 containing an aluminum-containing compound exists between the active material particles contained in the active material granular aggregate 51. For example, the film 50 containing an aluminum-containing compound exists between the adjoining first active material particle 511 and the second active material particle 512. At least one of the active material particles contained in the active material granular aggregate 51 illustrated in FIG. 2 has the entire surface thereof covered with the film 50 containing an aluminum-containing compound. The active material granular aggregate 51 may alternatively contain the active material particle not covered with the film containing an aluminum-containing compound. The active material granular aggregate 51 illustrated in FIG. 2 can be configured by mutually granulating the active material particles covered on their surfaces with the film 50 containing an aluminum-containing compound. The negative electrode 3 illustrated in FIG. 2 tends to be inferior to the case illustrated in FIG. 1 in terms of lithium ion conductivity, but tends to be superior in terms of suppression of a side reaction between the active material particles and the aqueous electrolyte. The negative electrode illustrated in FIG. 2 can be manufactured, for example, by using the active material particles preliminarily provided on the surface thereof with the film containing an aluminum-containing compound.

<SEM-EDX>

The proportion (Al/Al+Ti) on the surface of the negative electrode active material-containing layer may be analyzed by SEM-EDX according to the procedures below.

First, the secondary battery is disassembled to take out the negative electrode. The negative electrode thus

taken out is washed with pure water, and dried overnight in the atmospheric environment.

The negative electrode thus taken out is subjected to measurement based on energy dispersive X-ray analysis (EDX). Five points randomly selected on the surface of the negative electrode active material-containing layer are observed at 200× magnification, to calculate the proportion of aluminum atom ({Al atom concentration/(Al atom concentration + Ti atom concentration)} × 100). Field of view of the EDX measurement contains a plurality of negative electrode active material particles. Count of characteristic X-ray generated in the EDX analysis is proportional to concentration of atom. Hence, the concentrations of atoms contained in the surface of an object to be analyzed can be determined by measuring the intensity (count) of the individual characteristic X-rays. Aluminum atom concentration and titanium atom concentration are determined at each of five points selected previously, and the proportion of atomic concentration of aluminum atom relative to a total atomic concentration of titanium atom and aluminum atom ({Al atom concentration/(Al atom concentration + Ti atom concentration)} × 100) is calculated for each point. Values obtained from five points are averaged to determine the proportion (Al/Al+Ti).

The larger the atomic percentage of aluminum, the more abundant the aluminum existing on the surface of the negative electrode active material-containing layer, and this can be interpreted by abundance of the aluminum-containing compound on the surface of the negative electrode active material-containing layer.

In a case where the active material per se contains aluminum, combination with Auger electron spectroscopy enables confirmation of difference of proportion (Al/Al+Ti) between the surface and the inside of the active material-containing layer. From these results, it is possible to confirm whether or not the film containing an aluminum-containing compound is formed on the surface of the active material-containing layer.

The negative electrode current collector contains aluminum. The negative electrode current collector is preferably, for example, a metal foil that includes aluminum, or an aluminum alloy foil that contains at least one element selected from magnesium (Mg), titanium (Ti), zinc (Zn), manganese (Mn), iron (Fe), copper (Cu) and silicon (Si). The negative electrode current collector may have a form other than foil, such as mesh, porous body and so forth. The form of foil, having small volume and large surface area, is preferred in view of improving energy density and output.

The thickness of the negative electrode current collector is preferably 5 μm or more and 20 μm or less. The current collector having such a thickness can balance the strength and weight reduction of the electrode.

The surface of the negative electrode current collector may alternatively have a part in which the negative electrode active material-containing layer is not formed. Such a part can serve as a negative electrode tab.

As described previously, at least one of the zinc-containing film that includes metal zinc or zinc compound, the hydrophobic film that contains the heterocyclic compound, and the composite film having the zinc-containing film and the hydrophobic film mixed therein, can exist at least on a part of the surface of the negative electrode current collector. The entire surface of the negative electrode current collector is preferably covered with any one of these films.

The negative electrode active material employable is titanium-containing oxide having lithium ions insertion/extraction potential within the range from 1 V (vs. $Li/Li^+$) to 3 V (vs. $Li/Li^+$) relative to metal lithium potential. Since the negative electrode active material-containing layer has, the film containing an aluminum-containing compound formed on at least a part of the surface thereof, so that the secondary battery according to the approach can properly undergo charge-and-discharge, even if the negative electrode active material contains the titanium-containing oxide having such a low potential as described above.

The titanium-containing oxide employable includes titanium oxide, lithium-titanium composite oxide, monoclinic niobium-titanium composite oxide, and sodium-niobium-titanium composite oxide. One type or two or more types of the titanium-containing oxide can be included in the negative electrode active material.

The titanium oxide includes, for example, a titanium oxide having a monoclinic structure, a titanium oxide having a rutile structure, and a titanium oxide having an anatase structure. For titanium oxides of these crystal structures, the composition before charge can be expressed as $TiO_2$, and the composition after charge can be expressed as $Li_xTiO_2$ ($0 \leq x \leq 1$). In addition, the structure of titanium oxide having a monoclinic structure before charge can be expressed as $TiO_2$(B).

The lithium-titanium composite oxide includes, for example, a lithium titanium composite oxide having a spinel structure (for example, the general formula is $Li_{4+x}Ti_5O_{12}$ ($-1 \leq x \leq 3$)), a lithium titanium composite oxide having a ramsdellite structure (for example, $Li_{2+x}Ti_3O_7$ ($-1 \leq x \leq 3$)), $Li_{1+x}Ti_2O_4$ ($0 \leq x \leq 1$), $Li_{1.1+x}Ti_{1.8}O_4$ ($0 \leq x \leq 1$), $Li_{1.07+x}Ti_{1.86}O_4$ ($0 \leq x \leq 1$), and $Li_xTiO_2$ ($0 < x \leq 1$). The lithium titanium composite oxide may be a lithium titanium composite oxide in which a dopant is introduced.

The monoclinic niobium-titanium composite oxide is exemplified by a compound represented by $Li_xTi_{1-y}M1_yNb_{2-z}M2_zO_{7+\delta}$. In the formula, M1 is at least one selected from the group consisting of Zr, Si, and Sn. M2 is at least one selected from the group consisting of V, Ta, and Bi. Suffixes in the compositional formulae are given by $0 \leq x \leq 5$, $0 \leq y < 1$, $0 \leq z < 2$, and $-0.3 \leq \delta \leq 0.3$. The monoclinic niobium-titanium composite oxide is specifically exemplified by $Li_xNb_2TiO_7$ ($0 \leq x \leq 5$).

Another example of the monoclinic niobium-titanium composite oxide is exemplified by a compound represented by $Li_xTi_{1-y}M3_{y+z}Nb_{2-z}O_{7-\delta}$. In the formula, M3 is at least one selected from Mg, Fe, Ni, Co, W, Ta, and Mo. Suffixes in the compositional formulae are given by $0 \leq x < 5$, $0 \leq y < 1$, $0 \leq z < 2$, and $-0.3 \leq \delta \leq 0.3$.

Specific examples of the niobium-titanium composite oxides include $Nb_2TiO_7$, $Nb_2Ti_2O_9$, $Nb_{10}Ti_2O_{29}$,

$Nb_{14}TiO_{37}$, and $Nb_{24}TiO_{62}$. The niobium-titanium composite oxide may be a substituted niobium-titanium composite oxide in which at least a part of Nb and/or Ti is substituted with a dopant. Examples of substitution elements are Na, K, Ca, Co, Ni, Si, P, V, Cr, Mo, Ta, Zr, Mn, Fe, Mg, B, Pb, and Al. The substituted niobium-titanium composite oxide may include one kind or two or more kinds of the substitution elements.

The sodium titanium oxides include, for example, an orthorhombic Na-containing niobium titanium composite oxide represented by the general formula $Li_{2+v}Na_{2-w}M1_xTi_{6-y-z}Nb_yM2_zO_{14+\delta}$ ($0 \leq v \leq 4$, $0 \leq w < 2$, $0 \leq x < 2$, $0 \leq y < 6$, $0 \leq z < 3$, $-0.5 \leq \delta \leq 0.5$, M1 includes at least one element selected from the group consisting of Cs, K, Sr, Ba, and Ca, and M2 includes at least one element selected from the group consisting of Zr, Sn, V, Ta, Mo, W, Fe, Co, Mn, and Al).

As the negative electrode active material, the titanium oxide having the anatase structure, the titanium oxide having the monoclinic structure, the lithium titanium composite oxide having the spinel structure, or a mixture thereof is preferably used. When one of these oxides is used as the negative electrode active material and a lithium manganese composite oxide is used as the positive electrode active material, a high electromotive force can be obtained.

The negative electrode active material is contained in the negative electrode active material-containing layer in a form of, for example, particles. The negative electrode active material particles can be primary particles, secondary particles as the aggregates of primary particles, or a mixture of single primary particles and secondary particles. The shape of a particle is not particularly limited and can be, for example, spherical, elliptical, flat, or fibrous.

An average particle size (diameter) of primary particles of the negative electrode active material is preferably 3 μm or less and more preferably 0.01 μm or more and 1 μm or less. An average particle size (diameter) of secondary particles of the negative electrode active material is preferably 30 μm or less and more preferably 5 μm or more and 20 μm or less.

Each of the primary particle size and the secondary particle size means a particle size with which a volume integrated value becomes 50% in a particle size distribution obtained by a laser diffraction particle size distribution measuring apparatus. As the laser diffraction particle size distribution measuring apparatus, Shimadzu SALD-300 is used, for example. For measurement, luminous intensity distribution is measured 64 times at intervals of 2 seconds. As a sample used when performing the particle size distribution measurement, a dispersion obtained by diluting the negative electrode active material particles by N-methyl-2-pyrrolidone such that the concentration becomes 0.1 wt% to 1 wt% is used. Alternatively, a measurement sample obtained by dispersing 0.1g of a negative electrode active material in 1 to 2 ml of distilled water containing a surfactant is used.

In addition to the negative electrode active material, the negative electrode active material-containing layer may contain a conductive agent and a binder. A conductive agent is added as necessary in order to increase the current-collecting performance and to suppress the contact resistance between the active material and the current collector. The binder has a function of binding the active material, the conductive agent, and the current collector.

The conductive agent is mixed aiming at enhancing current collection performance and at suppressing contact resistance between the active material and the current collector. Examples of the conductive agent include carbonaceous material such as vapor grown carbon fiber (VGCF), carbon black such as acetylene black, and graphite. One of them may be used as the conductive agent, or two or more of them may be combined for use as the conductive agent. Alternatively, the surface of the active material particle may be subjected to carbon coating or electron conductive inorganic material coating, in place of using the conductive agent.

The binder is mixed aiming at filling gaps among dispersed active materials, and binding the active material and the negative electrode current collector. Examples of the binder include polytetrafluoroethylene (PTFE), polyvinylidenefluoride (PVdF), fluorine-containing rubber, styrene butadiene rubber, polyacrylate compound, imide compound, carboxymethylcellulose (CMC), and salt of CMC. One of them may be used as the binder, or two or more of them may be combined for use as the binder.

Preferred percentages of mixing of the negative electrode active material, the conductive agent and the binder in the negative electrode active material-containing layer, are given by the range from 70% by mass to 95% by mass for the negative electrode active material, by the range from 3% by mass to 20% by mass for the conductive agent, and by the range from 2% by mass to 10% by mass for the binder. With the percentage of mixing of the conductive agent adjusted to 3% by mass or larger, current collection performance of the negative electrode active material-containing layer may be improved. With the percentage of mixing of the binder adjusted to 2% by mass or larger, a sufficient level of electrode strength is obtainable, meanwhile with the percentage adjusted to 10% by mass or smaller, insulating parts in the electrode may be reduced.

Density of the negative electrode active material-containing layer (excluding the current collector) is preferably within the range from 1.8 g/cm$^3$ to 2.8 g/cm$^3$. With the density of the negative electrode active material-containing layer adjusted within the range, the negative electrode will excel in energy density and retainability of the aqueous electrolyte. The density of the negative electrode active material-containing layer is more preferably within the range from 2.1 g/cm$^3$ to 2.6 g/cm$^3$.

The negative electrode may be manufactured, for example, by the method below. First, the negative electrode active material, the conductive agent and the binder are suspended into a solvent to prepare a slurry. The active material

granular aggregate can be produced in the process of manufacturing the slurry. The slurry is coated on one surface or both surfaces of the negative electrode current collector. Next, the coated slurry is dried to obtain a stack of the negative electrode active material-containing layer and the negative electrode current collector. The stack is then pressed. The negative electrode is manufactured in this way.

(2) Positive Electrode

The positive electrode can contain a positive electrode current collector and a positive electrode active material-containing layer. The positive electrode active material-containing layer can be formed on one surface or both surfaces of the positive electrode current collector. The positive electrode active material-containing layer can contain a positive electrode active material, and any optional conductive agent and binder.

The positive electrode active material employable is oxide or sulfide, for example. The positive electrode may contain, as the positive electrode active material, only one kind of compound independently, or two or more kinds of compound in a combined manner. The oxide and sulfide are exemplified by compounds capable of inserting and extracting alkali metal or alkali metal ion.

Examples of such compounds include manganese dioxide ($MnO_2$), iron oxide, copper oxide, nickel oxide, lithium-manganese composite oxide (for example, $Li_xMn_2O_4$ or $Li_xMnO_2$; $0 < x \leq 1$), lithium-nickel composite oxide (for example, $Li_xNiO_2$; $0 < x \leq 1$), lithium-cobalt composite oxide (for example, $Li_xCoO_2$; $0 < x \leq 1$), lithium-nickel-cobalt composite oxide (for example, $Li_xNi_{1-y}Co_yO_2$; $0 < x \leq 1$, $0 < y < 1$), lithium-manganese-cobalt composite oxide (for example, $Li_xMn_yCo_{1-y}O_2$; $0 < x \leq 1$, $0 < y < 1$), lithium-manganese-nickel composite oxide having spinel structure (for example, $Li_xMn_{2-y}Ni_yO_4$; $0 < x \leq 1$, $0 < y < 2$), lithium-phosphorus oxide having olivine structure (for example, $Li_xFePO_4$; $0 < x \leq 1$, $Li_xFe_{1-y}Mn_yPO_4$; $0 < x \leq 1$, $0 < y < 1$, $Li_xCoPO_4$; $0 < x \leq 1$), iron sulfate ($Fe_2(SO_4)_3$), vanadium oxide (for example, $V_2O_5$), and lithium-nickel-cobalt-manganese composite oxide ($Li_xNi_{1-x-y}Co_xMn_yO_2$; $0 < x \leq 1$, $0 < y < 1$, $0 < z < 1$, $y + z < 1$).

Among them, examples of compounds more preferred as the positive electrode active material include lithium-manganese composite oxide having the spinel structure (for example, $Li_xMn_2O_4$; $0 < x \leq 1$), lithium-nickel composite oxide (for example, $Li_xNiO_2$; $0 < x \leq 1$), lithium-cobalt composite oxide (for example, $Li_xCoO_2$; $0 < x \leq 1$), lithium-nickel cobalt composite oxide (for example, $Li_xNi_{1-y}Co_yO_2$; $0 < x \leq 1$, $0 < y < 1$), lithium-manganese nickel composite oxide having spinel structure (for example, $Li_xMn_{2-y}Ni_yO_4$; $0 < x \leq 1$, $0 < y < 2$), lithium-manganese cobalt composite oxide (for example, $Li_xMn_yCo_{1-y}O_2$; $0 < x \leq 1$, $0 < y < 1$), lithium iron phosphate (for example, $Li_xFePO_4$; $0 < x \leq 1$), and lithium-nickel cobalt manganese composite oxide ($Li_xNi_{1-x-y}Co_xMn_yO_2$; $0 < x \leq 1$, $0 < y < 1$, $0 < z < 1$, $y + z < 1$). With these compounds used as the positive electrode active material, the positive electrode potential may be elevated.

In a case where a room-temperature molten salt is used as the electrolyte of battery, it is preferable to use the positive electrode active material that contains lithium-iron phosphate, $Li_xVPO_4F$ ($0 \leq x \leq 1$), lithium-manganese composite oxide, lithium-nickel composite oxide, lithium-nickel-cobalt composite oxide, or mixture of them. These compounds are less reactive with the room-temperature molten salt, and can therefore improve the cycle lifetime. The room-temperature molten salt will be detailed later.

The primary particle size of the positive electrode active material is preferably within the range from 100 nm to 1 μm. The positive electrode active material having a primary particle size of 100 nm or larger is easy to handle in terms of industrial production. The positive electrode active material with a primary particle size of 1 μm or smaller enables lithium ion to smoothly diffuse into solid.

Specific surface area of the positive electrode active material is preferably within the range from 0.1 $m^2/g$ to 10 $m^2/g$. The positive electrode active material with a specific surface area of 0.1 $m^2/g$ or larger can afford sufficient sites for insertion/extraction of lithium ion. The positive electrode active material with a specific surface area of 10 $m^2/g$ or smaller is easy to handle in terms of industrial production, and can keep good charge-and-discharge cycle performance.

The binder is mixed aiming at filling gaps among dispersed positive electrode active materials, and binding the positive electrode active material and the positive electrode current collector. Examples of the binder include polytetrafluoroethylene (PTFE), polyvinylidenefluoride (PVdF), fluorine-containing rubber, polyacrylate compound, imide compound, carboxymethylcellulose (CMC), and salt of CMC. One of them may be used as the binder, or two or more of them may be combined for use as the binder.

The conductive agent is mixed aiming at enhancing current collection performance and at suppressing contact resistance between the positive electrode active material and the positive electrode current collector. Examples of the conductive agent include carbonaceous material such as vapor grown carbon fiber (VGCF), carbon black such as acetylene black, and graphite. One of them may be used as the conductive agent, or two or more of them may be combined for use as the conductive agent. Alternatively, the conductive agent is omissible.

In the positive electrode active material-containing layer, preferred percentages of mixing of the positive electrode active material and the binder are within the range from 80% by mass to 98% by mass, and from 2% by mass to 20% by mass, respectively.

With the content of the binder adjusted to 2% by mass or more, a sufficient level of electrode strength is

obtainable. The binder can also function as an insulator. Hence, with the content of binder adjusted to 20% by mass or less, the amount of insulator contained in the electrode decreases, and thereby the internal resistance may be lowered.

In a case where the conductive agent is added, percentages of mixing of the positive electrode active material, the binder, and the conductive agent are preferably within the range from 77% by mass to 95% by mass, from 2% by mass to 20% by mass, and from 3% by mass to 15% by mass, respectively.

With the amount of conductive agent adjusted to 3% by mass or more, the aforementioned effects may be demonstrated. Meanwhile, with the amount of conductive agent adjusted to 15% by mass or less, percentage of the conductive agent possibly brought into contact with the electrolyte may be reduced. With the percentage suppressed low, the electrolyte may be suppressed from being decomposed during storage at high temperature.

The positive electrode current collector is preferably a metal foil containing titanium, aluminum or stainless steel, or an aluminum alloy foil containing at least one element selected from Mg, Ti, Zn, Ni, Cr, Mn, Fe, Cu and Si. The surface of the current collector may be covered with a dopant, in order to prevent corrosion of the current collector due to a reaction between the current collector and the electrolyte.

Thickness of the positive electrode current collector is preferably within the range from 5 $\mu$m to 20 $\mu$m, and is more preferably 15 $\mu$m or thinner.

The surface of the positive electrode current collector may alternatively have a part in which the positive electrode active material-containing layer is not formed. Such a part can serve as a positive electrode tab.

The positive electrode may be manufactured, for example, by the method below. First, the positive electrode active material, the conductive agent and the binder are suspended into a solvent to prepare a slurry. The slurry is coated on one surface or both surfaces of the positive electrode current collector. Next, the coated slurry is dried to obtain a stack of the positive electrode active material-containing layer and the positive electrode current collector. The stack is then pressed. The positive electrode is manufactured in this way.

Alternatively, the positive electrode may be manufactured according to a method below. First, the positive electrode active material, the conductive agent and the binder are mixed to prepare a mixture. The mixture is then formed into pellets. The pellets are then arranged on the positive electrode current collector to obtain the positive electrode.

(3) Aqueous Electrolyte

The aqueous electrolyte includes an aqueous solvent, an electrolyte salt, zinc ions, and a heterocyclic compound of formula (A) having aromatic rings and heteroatoms. The aqueous electrolyte is, for example, in a liquid form. The liquid aqueous electrolyte is an aqueous solution prepared by dissolving an electrolyte salt as a solute into the aqueous solvent. The aqueous solution preferably contains 1 mol or more aqueous solvent per 1 mol of the salt as a solute, which is more preferably 3.5 mol or more.

The aqueous solvent employable is a water-containing solution. Here, the water-containing solution may be pure water, or may be mixed solvent of water and an organic solvent. Percentage of water contained in the aqueous solvent is 50% by volume or larger, and more preferably 90% by volume or larger.

The aqueous electrolyte may be a gel-type electrolyte. The gel-type electrolyte may be prepared by mixing and compounding the aforementioned liquid aqueous electrolyte and a polymer compound. The polymer compound is exemplified by polyvinylidene fluoride (PVdF), polyacrylonitrile (PAN), and polyethylene oxide (PEO).

Inclusion of water in the aqueous electrolyte may be confirmed by GC-MS (gas chromatography-mass spectrometry) measurement. Salt concentration and water content in the aqueous electrolyte may be measured, for example, by inductively coupled plasma (ICP) emission spectrometry. Molar concentration (mol/L) may be determined by weighing a specified amount of the aqueous electrolyte, and by calculating the concentration of the salt contained therein. The numbers of moles of the solute and solvent may be calculated by measuring specific gravity of the aqueous electrolyte.

The heterocyclic compound of formula (A) that includes aromatic rings and heteroatoms can enhance stability of zinc ions and aluminum ions contained in the aqueous electrolyte. The heterocyclic compound confines water molecule in the aqueous electrolyte, due to an interaction between the electron donating part attributable to the heteroatom, and water molecule. Hence, with the aqueous electrolyte containing the heterocyclic compound, water molecule can be inhibited from approaching the active material particles, and thereby water may be suppressed from being electrolyzed. Examples of the heteroatom include nitrogen atom, sulfur atom, and oxygen atom.

The heterocyclic compound that includes aromatic rings and heteroatoms may be benzotriazole.

The heterocyclic compound that includes aromatic rings and heteroatoms is at least one selected from a compound group represented by formula (A) below.

Formula (A):

[Chemical Formula 1]

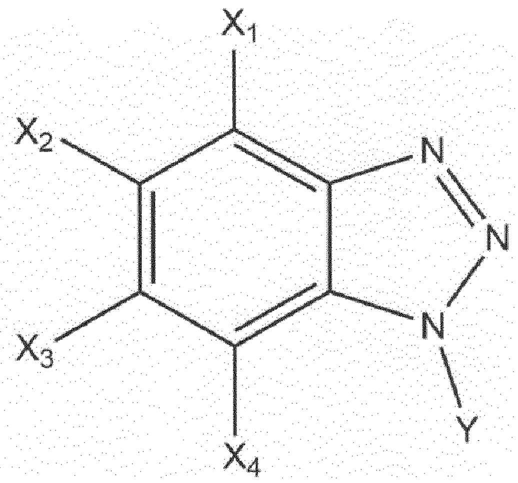

In formula (A), each of $X_1$ to $X_4$ is a hydrogen atom, alkyl group or carboxy group, and Y is a hydrogen atom or alkoxy group.

The alkyl group has, for example, 1 to 3 carbon atoms. The carboxy group has, for example, 1 to 3 carbon atoms. The alkoxy group has, for example, 1 to 3 carbon atoms.

Any one kind selected from the compound group may be used independently as the heterocyclic compound, or two or more kinds may be used in a mixed manner.

Concentration of the heterocyclic compound contained in the aqueous electrolyte is, for example, within the range from 0.01% by weight to 1% by weight, more preferably within the range from 0.01% by weight to 0.5% by weight, and even more preferably within the range from 0.1% by weight to 0.5% by weight. With the concentration of heterocyclic compound excessively low, aluminum ion eluted from the current collector would not be stabilized by the heterocyclic compound, so that the film containing an aluminum-containing compound would not fully be formed on the surface of the negative electrode active material-containing layer. Alternatively, a composite film possibly formed on the current collector would be insufficient and would fail in fully suppressing hydrogen production, causing a tendency to degrade the charge-and-discharge efficiency of the secondary battery. With the concentration of heterocyclic compound excessively high, an excessive film of the heterocyclic compound would be formed on the current collector foil, to thereby degrade conductivity of the current collector foil. Also this inhibits aluminum from eluting from the current collector foil, making the film containing an aluminum-containing compound less likely to be formed on the negative electrode, and thereby degrading the effect of suppressing water decomposition. Accordingly, battery performances are likely to degrade.

Concentration of zinc ions contained in the aqueous electrolyte is, for example, within the range from 0.1% by weight to 3% by weight, preferably within the range from 0.2% by weight to 3% by weight, and more preferably within the range from 0.2% by weight to 1% by weight. The upper limit of concentration may be 2.5% by weight. With the concentration of zinc ions excessively low, a composite film possibly formed on the current collector would be insufficient and would fail in fully suppressing hydrogen production, causing a tendency to degrade the charge-and-discharge efficiency of the secondary battery. With the concentration of zinc ions excessively high, the film containing an aluminum-containing compound would not fully be formed on the surface of the negative electrode active material-containing layer, possibly degrading the charge-and-discharge efficiency. In this case, for example, the proportion ({Al atom concentration/(Al atom concentration + Ti atom concentration)} × 100) would be smaller than 5 atm%, on the surface of the negative electrode active material-containing layer.

Concentration of the heterocyclic compound contained in the aqueous electrolyte may be measured by ion chromatography.

Concentration of zinc ions contained in the aqueous electrolyte may be measured by ICP emission spectrometry.

The electrolyte salt employable may, for example, be lithium salt, sodium salt, or mixture of them.

Examples of the lithium salt employable include lithium chloride (LiCl), lithium bromide (LiBr), lithium hydroxide (LiOH), lithium sulfate ($Li_2SO_4$), lithium nitrate ($LiNO_3$), lithium acetate ($CH_3COOLi$), lithium oxalate ($Li_2C_2O_4$), lithium carbonate ($Li_2CO_3$), lithium bis(trifluoromethanesulfonyl)imide) (LiTFSI; $LiN(SO_2CF_3)_2$), lithium bis (fluorosulfonyl)imide (LiFSI; $LiN(SO_2F)_2$), and lithium bis(oxalato)borate (LiBOB: $LiB[(OCO)_2]_2$).

The sodium salt employable includes sodium chloride (NaCl), sodium sulfate ($Na_2SO_4$), sodium hydroxide (NaOH), sodium nitrate, ($NaNO_3$) and sodium trifluoromethanesulfonylamide (NaTFSA).

Molar concentration of lithium ion or sodium ion in the aqueous electrolyte is preferably 3 mol/L or higher, preferably 6 mol/L or higher, and preferably 12 mol/L or higher. With the concentration of lithium ion or sodium ion kept high in the aqueous electrolyte, electrolysis of the aqueous electrolyte at the negative electrode will be more likely to be suppressed, and thereby generation of hydrogen from the negative electrode will tend to decrease.

pH of the aqueous electrolyte is preferably smaller than 7 as described previously, and is more preferably 5 or smaller. The lower limit value of pH of the aqueous electrolyte is, for example, 4.

Interfacial tension of the aqueous electrolyte is preferably 48 mN/m or smaller. With the interfacial tension controlled to 48 mN/m or smaller, affinity between the electrode and the aqueous electrolyte will be improved, and insertion/extraction of lithium ion at the electrode will be promoted. With the interfacial tension exceeding 48 mN/m, intercalation/deintercaltaion of lithium ion at the electrode will be inhibited, due to excessively high interfacial tension and low affinity between the electrode and the aqueous electrolyte. The interfacial tension of the aqueous electrolyte is more preferably within the range from 25 mN/m to 30 mN/m. Excessively large interaction between the aqueous electrolyte and the electrode will promote water decomposition at the electrode. This is because the interfacial tension, when controlled within the range from 25 mN/m to 30 mN/m, might increase the affinity between the electrode and the aqueous electrolyte, but can prevent water decomposition at the electrode.

When measuring the interfacial tension, a container of battery, for example a battery cylinder, is pierced at the bottom, and the battery is housed in a collection vessel. The collection vessel with the battery housed therein is loaded on a high-speed centrifuge, and the liquid aqueous electrolyte is extracted under centrifugal force from the battery into the collection vessel. The interfacial tension of the aqueous electrolyte can be determined, for example, by the pendant drop method. An automated contact angle meter Dme-201, manufactured by Kyowa Interface Science Co., Ltd., for example, can be used as a measuring instrument.

The interfacial tension is calculated based on the pendant drop method, and the interfacial tension of the aqueous electrolyte is determined by equation (1) below.

$$\text{Interfacial tension (mN/M)} = \Delta\rho g \cdot de^2 (1/H) \ldots\ldots (1)$$

Definitions of the symbols in equation (1) are as follows: $\Delta\rho$: difference of density, g: acceleration of gravity, de: maximum diameter of pendant drop, 1/H: correction coefficient. Measurement is, for example, repeated five times, and an averaged value is employed as the interfacial tension.

Presence of the aromatic rings and the heteroatoms in the heterocyclic compound may be confirmed by measurement of proton nuclear magnetic resonance ($^1$H NMR) spectrometry of the aqueous electrolyte. The liquid aqueous electrolyte extracted from the battery, for example, can be subjected directly to the measurement of $^1$H NMR spectrum. The aqueous electrolyte is dissolved in deuterated chloroform ($CDCl_3$) to measure $^1$H NMR spectrum.

Whether or not the heterocyclic compound that includes aromatic rings and heteroatoms is contained in the aqueous electrolyte can be determined by GC-MS described previously. For example, the aqueous electrolyte is extracted with hexane, to collect an organic solvent in the aqueous electrolyte. The thus collected organic solvent may be identified by GC-MS and proton NMR.

(4) Separator

A separator may be disposed between a positive electrode and a negative electrode. When the separator is constituted of an insulating material, electrical contact between the positive electrode and the negative electrode can be prevented. It is desirable to use a separator having a shape allowing an electrolyte to move between the positive electrode and the negative electrode. Examples of the separator include nonwoven fabrics, films, and paper. Examples of materials forming the separator include polyolefin, such as polyethylene and polypropylene, and cellulose. Preferable examples of the separator include nonwoven fabrics containing cellulose fibers and porous films containing polyolefin fibers. The porosity of the separator is preferably 60% or more. A fiber diameter is preferably 10 μm or less. When the fiber diameter is 10 μm or less, an affinity of the separator with an electrolyte is enhanced, so that battery resistance can be reduced. A more preferable range of the fiber diameter is 3 μm or less. In a cellulose fiber containing nonwoven fabric having a porosity of 60% or more, impregnation of an electrolyte is good, and high output performance can be exhibited from low temperature to high temperature. The separator does not react with a negative electrode in long term charged storage, float charging, and over-charge, and a short-circuit between the negative electrode and the positive electrode due to dendrite precipitation of lithium metal does not occur. A more preferable range is 62% to 80%.

It is preferable that the separator has a thickness of 20 μm to 100 μm and a density of 0.2 g/cm$^3$ to 0.9 g/cm$^3$. If the thickness and the density of the separator are in these ranges, mechanical strength and a reduction in battery resistance can be balanced, so that a secondary battery in which an internal short-circuit is suppressed by a high output can be provided. Heat shrinkage of the separator under a high temperature environment is small, and good high temperature

storage performance can be exhibited.

As a separator, a solid electrolyte layer including solid electrolyte particles can also be used. The solid electrolyte layer may include one type of solid electrolyte particles or may include plural types of solid electrolyte particles. The solid electrolyte layer may be a solid electrolyte composite film including solid electrolyte particles. The solid electrolyte composite film is obtained by, for example, forming solid electrolyte particles into a film shape using a polymer material. The solid electrolyte layer may contain at least one selected from the group consisting of a plasticizer and an electrolyte salt. When the solid electrolyte layer contains an electrolyte salt, for example, alkali metal ion conductivity of the solid electrolyte layer can be further enhanced.

Examples of a polymer material include polyether type, polyester type, polyamine type, polyethylene type, silicone type and polysulfide type.

As the solid electrolyte, an inorganic solid electrolyte is preferably used. As the inorganic solid electrolyte, for example, an oxide-based solid electrolyte or a sulfide-based solid electrolyte can be used. As the oxide-based solid electrolyte, a lithium phosphate solid electrolyte having a NASICON structure and represented by a general formula $LiM_2(PO_4)_3$ is preferably used. M in the formula is preferably at least one element selected from the group consisting of titanium (Ti), germanium (Ge), strontium (Sr), zirconium (Zr), tin (Sn), and aluminum (Al). The element M preferably includes Al and one of Ge, Zr, and Ti.

Detailed examples of the lithium phosphate solid electrolyte having the NASICON structure include LATP ($Li_{1+x}Al_xTi_{2-x}(PO_4)_3$), $Li_{1+x}Al_xGe_{2-x}(PO_4)_3$, and $Li_{1+x}Al_xZr_{2-x}(PO_4)_3$. In the above formula, x falls within the range of $0 < x \leq 5$, x preferably falls within the range of $0 < x \leq 2$, x more preferably falls within the range of $0.1 \leq x \leq 0.5$. As the solid electrolyte, LATP is preferably used. LATP is excellent in waterproofness and hardly causes hydrolysis in the secondary battery.

As the oxide-based solid electrolyte, LIPON ($Li_{2.9}PO_{3.3}N_{0.46}$) in an amorphous state or LLZ ($Li_7La_3Zr_2O_{12}$) having a garnet structure may be used.

As the solid electrolyte, a sodium containing solid electrolyte may be used. The sodium containing solid electrolyte is excellent in the ionic conductivity of sodium ions. As the sodium containing solid electrolyte, $\beta$-alumina, a sodium phosphorus sulfide, or a sodium phosphorus oxide can, for example, be used. The sodium ions containing solid electrolyte preferably has a glass-ceramic form.

A composite solid electrolyte layer, which includes a composite layer having the aforementioned polymer material and the aforementioned solid electrolyte, and a porous self-supporting film, may be used as the separator. The porous self-supporting film includes a self-supporting film formed of polyolefin such as the aforementioned polyethylene or polypropylene, or cellulose.

(5) Container

As the container that stores the positive electrode, the negative electrode, and the aqueous electrolyte, a metal container, a laminated film container, or a resin container can be used.

As the metal container, a metal can made, for example, of nickel, iron, or stainless steel and having a rectangular shape or a cylindrical shape can be used. As the resin container, a container made, for example, of polyethylene, or polypropylene can be used.

The board thickness of each of the resin container and the metal container preferably falls within the range of 0.05 mm to 1 mm. The board thickness is more preferably 0.5 mm or less, and much more preferably 0.3 mm or less.

As the laminated film, for example, a multilayered film formed by covering a metal layer with a resin layer can be used. Examples of the metal layer include a stainless steel foil, an aluminum foil, and an aluminum alloy foil. As the resin layer, a polymer such as polypropylene (PP), polyethylene (PE), nylon, or polyethylene terephthalate (PET) can be used. The thickness of the laminated film preferably falls within the range of 0.01 mm to 0.5 mm. The thickness of the laminated film is more preferably 0.2 mm or less.

(6) Negative Electrode Terminal

The negative electrode terminal can be formed of a material which is electrochemically stable at the Li insertion/extraction potential of the above negative electrode active material and has conductivity. Specific examples of the material of the negative electrode terminal include copper, nickel, stainless steel and aluminum, and aluminum alloy containing at least one element selected from the group consisting of Mg, Ti, Zn, Mn, Fe, Cu, and Si. It is preferable to use aluminum or an aluminum alloy as the material of the negative electrode terminal. The negative electrode terminal is preferably formed of the same material as that of the negative electrode current collector in order to reduce the contact resistance with the negative electrode current collector.

(7) Positive Electrode Terminal

The positive electrode terminal can be formed of a material which is electrically stable in a potential range (vs.Li/$Li^+$) where the potential with respect to an oxidation-reduction potential of lithium is from 2.5 V to 5.5 V and has conductivity. Examples of the material of the positive electrode terminal include aluminum and aluminum alloy containing at least one element selected from the group consisting of Mg, Ti, Zn, Mn, Fe, Cu, and Si. The positive electrode terminal is preferably formed of the same material as that of the positive electrode current collector in order to reduce the contact resistance with the positive electrode current collector.

(8) Form of Secondary Battery

The secondary battery according to the approach can be used in various forms such as a rectangular shape, a cylindrical shape, a flat type, a thin type, and a coin type. In addition, the secondary battery may be a secondary battery having a bipolar structure. The secondary battery having a bipolar structure is advantageous in producing a plurality of serial cells by one cell.

Next, the secondary battery according to the approach will be described in more detail with reference to the drawings.

FIG. 3 is a cross-sectional view schematically showing an example of the secondary battery according to the approach. FIG. 4 is a cross-sectional view along line IV-IV of the secondary battery of FIG. 3.

An electrode group 1 is stored in a rectangular tubular metal container 2. The electrode group 1 has a structure formed by spirally winding a positive electrode 5 and a negative electrode 3 with a separator 4 interposing therebetween so as to form a flat shape. An aqueous electrolyte (not shown) is held by the electrode group 1. As shown in FIG. 3, a strip-shaped positive electrode side lead 22 is electrically connected to each of a plurality of portions at an end of the positive electrode 5 located on an end face of the electrode group 1. In addition, a strip-shaped negative electrode side lead 23 is electrically connected to each of a plurality of portions at an end of the negative electrode 3 located on the end face. The plurality of positive electrode side leads 22 are electrically connected to a positive electrode tab 16 in a bundled state. In addition, the plurality of the negative electrode side leads 23 are electrically connected to a negative electrode tab 17 in a bundled state. A sealing plate 10 made of a metal is fixed to the opening portion of the metal container 2, for example, by welding. The positive electrode tab 16 and the negative electrode tab 17 are extracted to the outside from outlet holes provided in the sealing plate 10, respectively. The inner surface of each outlet hole of the sealing plate 10 is coated with an insulating member to avoid a short circuit caused by contact between the positive electrode tab 16 and the negative electrode tab 17.

As shown in FIG. 4, the other end of the negative electrode tab 17 has a strip shape and is electrically connected to each of a plurality of portions of the negative electrode 3 located on the upper end face of the electrode group 1. Although not illustrated, similarly, the other end of the positive electrode tab 16 has a strip shape and is electrically connected to each of a plurality of portions of the positive electrode 5 located on the upper end face of the electrode group 1.

Referring to FIG. 3, the sealing plate 10 made of a metal is fixed to the opening portion of the metal container 2, for example, by welding. The positive electrode side leads 22 and the negative electrode side leads 23 are extracted to the outside from outlet holes provided in the sealing plate 10, respectively. On the inner surfaces of the outlet holes of the sealing plate 10, positive electrode gaskets 18 and negative electrode gaskets 19 are arranged to avoid a short circuit caused by contact between the positive electrode side leads 22 and the negative electrode side leads 23. When the positive electrode gaskets 18 and the negative electrode gaskets 19 are arranged, the airtightness of the rectangular secondary battery 100 can be maintained.

A control valve 11 (safety valve) is arranged in the sealing plate 10. If the internal pressure of the battery cell is raised by a gas generated by electrolysis of the aqueous solvent, the generated gas can be released from the control valve 11 to the outside. As the control valve 11, for example, a return type valve that operates when the internal pressure exceeds a set value and functions as a sealing plug when the internal pressure lowers can be used. Alternatively, a non-return type valve that cannot recover the function as a sealing plug once it operates can be used. In the secondary battery 100 shown in FIG. 3, the control valve 11 is arranged near the center of the sealing plate 10. However, the position of the control valve 11 may be an end of the sealing plate 10. The control valve 11 may be omitted.

Additionally, a liquid pouring port 12 is provided in the sealing plate 10. The aqueous electrolyte can be poured via the liquid pouring port 12. The liquid pouring port 12 can be closed by a sealing plug 13 after the aqueous electrolyte is poured. The liquid pouring port 12 and the sealing plug 13 may be omitted.

FIG. 5 is a partially cut-away perspective view schematically showing another example of a secondary battery according to the approach. FIG. 6 is an enlarged cross-sectional view of section B of the secondary battery shown in FIG. 5. FIG 5 and FIG 6 show an example of the secondary battery 100 used a laminated film container as a container.

The secondary battery 100 shown in FIGS. 5 and 6 includes an electrode group 1 shown in FIGS. 5 and 6, a container member 2 shown in FIG. 5, and an electrolyte, which is not shown. The electrode group 1 and the electrolyte are

housed in the container member 2. The electrolyte is held in the electrode group 1.

The container member 2 is made of a laminate film including two resin layers and a metal layer sandwiched between the resin layers.

As shown in FIG. 6, the electrode group 1 is a stacked electrode group. The stacked electrode group 1 has a structure in which positive electrodes 3 and negative electrodes 5 are alternately stacked with separator(s) 4 sandwiched therebetween.

The electrode group 1 includes a plurality of the negative electrodes 3. Each of the negative electrodes 3 includes the negative electrode current collector 3a and the negative electrode active material-containing layers 3b supported on both surfaces of the negative electrode current collector 3a. The electrode group 1 further includes a plurality of the positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at its side a portion 3c where the negative electrode active material-containing layer 3b is not supported on any surface. This portion 3c serves as a negative electrode tab. As shown in FIG. 6, the portion 3c serving as the negative electrode tab does not overlap the positive electrode 5. A plurality of the negative electrode tabs (portions 3c) are electrically connected to the belt-like negative electrode terminal 6. A leading end of the belt-like negative electrode terminal 6 is drawn to the outside from a container member 2.

Although not shown, the positive electrode current collector 5a of each of the positive electrodes 5 includes at its side a portion where the positive electrode active material-containing layer 5b is not supported on any surface. This portion serves as a positive electrode tab. Like the negative electrode tab (portion 3 c), the positive electrode tab does not overlap the negative electrode 3. Further, the positive electrode tab is located on the opposite side of the electrode group 1 with respect to the negative electrode tab (portion 3c). The positive electrode tab is electrically connected to the belt-like positive electrode terminal 7. A leading end of the belt-like positive electrode terminal 7 is located on the opposite side of the negative electrode terminal 6 and drawn to the outside from the container member 2.

The secondary battery according to the approach may constitute a battery module. The battery module includes a plurality of the secondary batteries according to the approach.

In the battery module according to the approach, individual unit cells may be arranged to be electrically connected in series or in parallel, or may be arranged in combination of series connection and parallel connection.

An example of the battery module according to the approach will be described with reference to drawings.

FIG. 7 is a perspective view schematically showing an example of the battery module according to the approach. A battery module 200 shown in FIG. 7 includes five single-batteries 100a to 100e, four bus bars 21, a positive electrode-side lead 22, and a negative electrode-side lead 23. Each of the five single-batteries 100a to 100e is a secondary battery according to the approach.

A bus bar 21 connects, for example, a negative electrode terminal 6 of a unit cell 100a and a positive electrode terminal 7 of a unit cell 100b adjacent to the unit cell 100a. Thus, the five unit cells 100 are connected in series by the four bus bars 21. Namely, a battery module 200 shown in FIG. 7 is a five cell series-connected battery module.

As shown in FIG. 7, the positive electrode terminal 7 of the unit cell 100a located at the left end among the five unit cells 100a to 100e is connected to the positive electrode side lead 22 for external connection. The negative electrode terminal 6 of the unit cell 100e located at the right end among the five unit cells 100a to 100e is connected to the negative electrode side lead 23 for external connection.

According to the first approach, a secondary battery is provided. The secondary battery includes a negative electrode, a positive electrode, and an aqueous electrolyte. The negative electrode includes an aluminum-containing negative electrode current collector, and a negative electrode active material-containing layer provided on the negative electrode current collector and containing a titanium-containing oxide. At least a part of the surface of the negative electrode active material-containing layer has a film containing an aluminum-containing compound. The aqueous electrolyte contains zinc ions, and a heterocyclic compound of formula (A) containing aromatic rings and heteroatoms. The weight ratio of zinc ions to the heterocyclic compound in the aqueous electrolyte is within the range from 0.4 to 250. Such a secondary battery can suppress electrolysis of water at the negative electrode, and can thereby demonstrate excellent charge-and-charge efficiency.

(Second Approach)

According to the second approach, a battery pack is provided. The battery pack includes the secondary battery according to the first approach. The battery pack may include the secondary battery according to the second approach or may include a battery module constituted of a plurality of the secondary batteries.

The battery pack according to the second approach may further include a protective circuit. The protective circuit has a function to control charging and discharging of the secondary battery. Alternatively, a circuit included in equipment where the battery pack serves as a power source (for example, electronic devices and vehicles) may be used as the

protective circuit for the battery pack.

Moreover, the battery pack according to the second approach may further comprise an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the second approach will be described with reference to the drawings.

FIG. 8 is an exploded perspective view schematically showing an example of the battery pack according to the second approach. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

The housing container 31 shown in FIG. 8 is a square bottomed container having a rectangular bottom surface. The housing container 31 is configured to be capable of storing the protective sheets 33, the battery module 200, the printed wiring board 34, and the wires 35. The lid 32 has a rectangular shape. The lid 32 covers the housing container 31 to store the battery module 200. The housing container 31 and the lid 32 are provided with, for example, openings or connection terminals (not shown) for connection to an external device.

The battery module 200 includes plural single-batteries 100, a positive electrode-side lead 22, a negative electrode-side lead 23, and an adhesive tape 24.

At least one of the plural single-batteries 100 is a secondary battery according to the first approach. The plural single-batteries 100 are stacked such that the negative electrode terminals 6 and the positive electrode terminals 7, which extend outside, are directed toward the same direction. The plural single-batteries 100 are electrically connected in series, as shown in FIG. 9. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape 24 fastens the plural single-batteries 100. The plural single-batteries 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural single-batteries 100.

One end of the positive electrode-side lead 22 is connected to the positive electrode terminal 7 of the single-battery 100 located lowermost in the stack of the single-batteries 100. One end of the negative electrode-side lead 23 is connected to the negative electrode terminal 6 of the single-battery 100 located uppermost in the stack of the single-batteries 100.

A printed wiring board 34 is disposed on the one inner surface along the short-side direction of inner surfaces of the housing container 31. The printed wiring board 34 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One main surface of the printed wiring board 34 faces the surface of the battery module 200 from which the negative electrode terminals 6 and the positive electrode terminals 7 extend out. An insulating plate (not shown) is disposed in between the printed wiring board 34 and the battery module 200.

The positive electrode-side connector 341 is provided with a through-hole. By inserting the other end of the positive electrode-side lead 22 into the though-hole, the positive electrode-side connector 341 and the positive electrode-side lead 22 become electrically connected. The negative electrode-side connector 342 is provided with a through-hole. By inserting the other end of the negative electrode-side lead 23 into the though-hole, the negative electrode-side connector 342 and the negative electrode-side lead 23 become electrically connected.

The thermistor 343 is fixed to one main surface of the printed wiring board 34. The thermistor 343 detects the temperature of each single-battery 100 and transmits detection signals to the protective circuit 344.

The external power distribution terminal 347 is fixed to the other main surface of the printed wiring board 34. The external power distribution terminal 347 is electrically connected to device(s) that exists outside the battery pack 300.

The protective circuit 344 is fixed to the other main surface of the printed wiring board 34. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural single-batteries 100 via the wires 35.

The protective sheets 33 are arranged on both inner surfaces of the housing container 31 along the long-side direction and on the inner surface along the short-side direction, facing the printed wiring board 34 across the battery

module 200 positioned therebetween. The protective sheets 33 are made of, for example, resin or rubber.

The protective circuit 344 controls charge and discharge of the plural single-batteries 100. The protective circuit 344 is also configured to cut-off electric connection between the protective circuit 344 and the external power distribution terminal 347 to external devices, based on detection signals transmitted from the thermistor 343 or detection signals transmitted from each single-battery 100 or the battery module 200.

An example of the detection signal transmitted from the thermistor 343 is a signal indicating that the temperature of the single-battery (single-batteries) 100 is detected to be a predetermined temperature or more. An example of the detection signal transmitted from each single-battery 100 or the battery module 200 is a signal indicating detection of over-charge, over-discharge, and overcurrent of the single-battery (single-batteries) 100. When detecting over-charge for each of the single batteries 100, the battery voltage may be detected, or a positive electrode potential or negative electrode potential may be detected. In the latter case, a lithium electrode to be used as a reference electrode may be inserted into each single battery 100.

Note that, as the protective circuit 344, a circuit included in a device (for example, an electronic device or an automobile) that uses the battery pack 300 as a power source may be used.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may be used as the external power distribution terminal.

Such a battery pack is used, for example, in applications where excellent cycle performance is demanded when a large current is extracted. More specifically, the battery pack is used as, for example, a power source for electronic devices, a stationary battery, or an onboard battery for vehicles. An example of the electronic device is a digital camera. The battery pack is particularly favorably used as an onboard battery.

The battery pack according to the second approach includes the secondary battery according to the first approach. The battery pack according to the second approach therefore excels in the charge-and-discharge efficiency.

(Third Approach)

According to the third approach, a vehicle is provided. The vehicle includes the battery pack according to the second approach.

In the vehicle according to the third approach, the battery pack is configured to collect regenerative energy of the power of the vehicle. The vehicle can include a mechanism (regenerator) configured to convert kinetic energy of the vehicle into regenerative energy.

Examples of the vehicle include two- to four-wheeled hybrid electric automobiles, two- to four-wheeled electric automobiles, electric assist bicycles, and railway cars.

In the vehicle, the installing position of the battery pack is not particularly limited. For example, the battery pack may be installed in the engine compartment of the vehicle, in rear parts of the vehicle, or under seats.

The vehicle may be equipped with a plurality of battery packs. In this case, the battery packs may be electrically connected in series, may be electrically connected in parallel, or may be electrically connected in a combination of series connection and parallel connection.

An example of the vehicle according to the third approach is explained below, with reference to the drawings.

FIG. 10 is a cross-sectional view schematically showing an example of a vehicle according to the third approach.

A vehicle 400, shown in FIG. 10 includes a vehicle body 40 and a battery pack 300 according to the second approach. In FIG. 10, the vehicle 400 is a four-wheeled automobile.

This vehicle 400 may have plural battery packs 300 installed. In such a case, the battery packs 300 may be connected in series, connected in parallel, or connected in a combination of in-series connection and in-parallel connection.

An example is shown in FIG. 10, where the battery pack 300 is installed in an engine compartment located at the front of the vehicle body 40. As described above, the battery pack 300 may be installed, for example, in rear sections of the vehicle body 40, or under a seat. The battery pack 300 may be used as a power source of the vehicle 400. The battery pack 300 can also recover regenerative energy of power of the vehicle 400.

The vehicle according to the third approach includes the battery pack according to the second approach. Hence,

this approach can provide the vehicle equipped with the battery pack that excels in charge-and-discharge efficiency.

(Fourth Approach)

According to the fourth approach, a stationary power supply is provided. The stationary power supply is mounted with the battery pack according to the second approach. Note that instead of the battery pack according to the second approach, the stationary power supply may have the secondary battery or the battery module according to the first approach.

FIG. 11 is a block diagram showing an example of a system including a stationary power supply according to the fourth approach. FIG. 11 is a diagram showing an application example to stationary power supplies 112, 123 as an example of use of battery packs 300A, 300B according to the second approach. In the example shown in FIG. 11, a system 110 in which the stationary power supplies 112, 123 are used is shown. The system 110 includes an electric power plant 111, the stationary power supply 112, a customer side electric power system 113, and an energy management system (EMS) 115. Also, an electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 performs control to stabilize the entire system 110 by utilizing the electric power network 116 and the communication network 117.

The electric power plant 111 generates a large amount of electric power from fuel sources such as thermal power or nuclear power. Electric power is supplied from the electric power plant 111 through the electric power network 116. In addition, the battery pack 300A is installed in the stationary power supply 112. The battery pack 300A can store electric power supplied from the electric power plant 111. In addition, the stationary power supply 112 can supply the electric power stored in the battery pack 300A through the electric power network 116. The system 110 is provided with an electric power converter 118. The electric power converter 118 includes a converter, an inverter, and a transformer. Thus, the electric power converter 118 can perform conversion between direct current (DC) and alternate current (AC), conversion between alternate currents of frequencies different from each other, and voltage transformation (step-up and step-down). Therefore, the electric power converter 118 can convert electric power from the electric power plant 111 into electric power that can be stored in the battery pack 300A.

The customer side electric power system 113 includes, for example, an electric power system for factories, an electric power system for buildings, and an electric power system for home use. The customer side electric power system 113 includes a customer side EMS 121, an electric power converter 122, and the stationary power supply 123. The battery pack 300B is installed in the stationary power supply 123. The customer side EMS 121 performs control to stabilize the customer side electric power system 113.

Electric power from the electric power plant 111 and electric power from the battery pack 300A are supplied to the customer side electric power system 113 through the electric power network 116. The battery pack 300B can store electric power supplied to the customer side electric power system 113. Similarly to the electric power converter 118, the electric power converter 122 includes a converter, an inverter, and a transformer. Thus, the electric power converter 122 can perform conversion between direct current and alternate current, conversion between alternate currents of frequencies different from each other, and voltage transformation (step-up and step-down). Therefore, the electric power converter 122 can convert electric power supplied to the customer side electric power system 113 into electric power that can be stored in the battery pack 300B.

Note that the electric power stored in the battery pack 300B can be used, for example, for charging a vehicle such as an electric vehicle. Also, the system 110 may be provided with a natural energy source. In such a case, the natural energy source generates electric power by natural energy such as wind power and solar light. In addition to the electric power plant 111, electric power is also supplied from the natural energy source through the electric power network 116.

The stationary power supply according to the fourth approach includes the battery pack according to the second approach. Hence, this approach can provide the stationary power supply equipped with the battery pack that excels in charge-and-discharge efficiency.

[Examples]

Examples are explained below. The approaches are not limited to Examples described below.

(Example 1)

<Manufacture of Positive Electrode>

$LiMn_2O_4$ as the positive electrode active material, acetylene black as the conductive agent, PVDF as the binder, and NMP as the solvent were mixed to obtain a slurry. A mass ratio of the positive electrode active material, the conductive

agent and the binder in the slurry was 100:5:10. The slurry was applied onto a surface of a Ti foil having a thickness of 20 μm. Then, the solvent was removed to obtain a stack. Next, the stack was subjected to press rolling. Then, the stack was dried, thereby a positive electrode was obtained.

<Manufacture of Negative Electrode>

$Li_4Ti_5O_{12}$ as the negative electrode active material, graphite as the conductive agent, PVDF as the binder, and NMP as the solvent were mixed to obtain a slurry. A mass ratio of the negative electrode active material, the conductive agent and the binder in the slurry was 100:10:10. The slurry was applied onto a surface of an Al foil having a thickness of 30 μm. Then, the solvent was removed to obtain a stack. Next, the stack was subjected to press rolling. Then, the stack was dried, thereby a negative electrode was obtained.

<Preparation of Aqueous Electrolyte>

An aqueous solution containing 0.1% by weight of 1,2,3-benzotriazole (BTA), 0.9% by weight of $ZnCl_2$, 12 mol/L of LiCl, and 10% by volume of NMP was prepared. This solution was used as an electrolyte solution of Example 1. Concentration of zinc ions ($Zn^{2+}$) contained in the electrolyte solution is 0.43% by weight. pH of the aqueous electrolyte solution was found to be 5. A stick type pH test paper pH-Fix was used for pH measurement in Examples and Comparative Examples.

<Manufacture of Evaluation Cell>

A lead electrode for a negative electrode was fixed on a plastic plate, and the negative electrode was fixed thereon. A lead electrode for a positive electrode was fixed on another plastic plate, and the positive electrode was fixed thereon. The prepared electrolyte (180 μL) was dropped on the negative electrode, and thereon, an LATP solid electrolyte film as the separator, having mixed therein $Li_{1.3}Al_{0.3}Ti_{1.7}(PO_4)_3$ (abbreviated as LATP, hereinafter) and polyvinylbutyral as the polymer material, was placed and brought into close contact. A 12 mol/L aqueous lithium chloride solution (180 μL) was dropped on the opposite side of the separator, the positive electrode was placed thereon and brought into close contact, and then further fixed with screws. The cell was then allowed to stand for 24 hours.

(Example 2)

An evaluation cell was manufactured in the same way as in Example 1, except that an aqueous electrolyte described below was used.

An aqueous solution containing 0.5% by weight of BTA, 0.5% by weight of $ZnCl_2$, 12 mol/L of LiCl, and 10% by volume of NMP was prepared. This solution was used as an electrolyte solution of Example 2. Concentration of zinc ions ($Zn^{2+}$) contained in the electrolyte solution is 0.24% by weight. pH of the aqueous electrolyte was found to be 4.

(Example 3)

An evaluation cell was manufactured in the same way as in Example 1, except that an aqueous electrolyte described below was used.

An aqueous solution containing 0.01% by weight of BTA, 4.95% by weight of $ZnCl_2$, 12 mol/L of LiCl, and 10% by volume of NMP was prepared. This solution was used as an electrolyte solution of Example 3. Concentration of zinc ions ($Zn^{2+}$) contained in the electrolyte solution is 2.4% by weight. pH of the aqueous electrolyte was found to be 7.

(Comparative Example 1)

An evaluation cell was manufactured in the same way as in Example 1, except that BTA was not contained in the aqueous electrolyte.

That is, an aqueous solution containing, 1% by weight of $ZnCl_2$, 12 mol/L of LiCl, and 10% by volume of NMP was used as an electrolyte solution of Comparative Example 1. Concentration of zinc ions ($Zn^{2+}$) contained in the aqueous electrolyte is 0.48% by weight, and pH was found to be 8.

(Comparative Example 2)

An evaluation cell was manufactured in the same way as in Example 1, except that an aqueous electrolyte described below was used.

An aqueous solution containing 0.5% by weight of BTA, 0.1% by weight of $ZnCl_2$, 12 mol/L of LiCl, and 10% by volume of NMP was prepared. This solution was used as an electrolyte solution of Comparative Example 2. Concentration of zinc ions ($Zn^{2+}$) contained in the electrolyte is 0.05% by weight. pH of the aqueous electrolyte was found to be 3.

(Comparative Example 3)

An evaluation cell was manufactured in the same way as in Example 1, except that an electrolyte described below was used.

An aqueous solution containing 0.005% by weight of BTA, 4.75% by weight of $ZnCl_2$, 12 mol/L of LiCl, and 10% by volume of NMP was prepared. This solution was used as an electrolyte solution of Comparative Example 3. Concentration of zinc ions ($Zn^{2+}$) contained in the electrolyte solution is 2.28% by weight. pH of the aqueous electrolyte was found to be 8.

<Evaluation of Cell>

The evaluation cells manufactured in the individual Examples were subjected to constant current charge-and-discharge test, and the negative electrodes were subjected to energy dispersive X-ray spectroscopic (SEM-EDX) analysis.

<Constant Current Charge-and-Discharge Test>

Both of charging and discharging were carried at a rate of 0.5 C. An end condition of charging was determined by the earliest time point, among from a time point at which current value reached 0.25 C, a time point at which charging time of 132 minutes has elapsed, and a time point at which the charge capacity reached 170 mAh/g. An end condition of discharging was determined by a time point at which 132 minutes has elapsed.

Twenty cycles of charge-and-discharge were repeated, while defining one cycle of charge-and-discharge by a combination of one-time charging and one-time discharging. Charge capacity and discharge capacity were measured for every charge-and-discharge cycle. Using the obtained results, charge-and-discharge efficiency for every cycle was calculated from equation (2) below.

$$\text{Charge-and-discharge efficiency (\%)} = 100 \times \{\text{Discharge capacity (mAh/g)}/\text{Charge capacity (mAh/g)}\}\ldots (2) \qquad (2)$$

<Energy Dispersive X-Ray Spectroscopic (SEM-EDX) Analysis>

Energy dispersive X-ray spectroscopic (SEM-EDX) analysis was carried out using SU8020 from Hitachi High-Technologies Corporation, according to the method described in approaches. Five average fields of view were analyzed at 200× magnification, and at an electron beam acceleration voltage of 15 keV. In all of Examples 1 to 3 and Comparative Examples 1 to 3, aluminum atom was detected on the surfaces of the negative electrode active material-containing layers. That is, in each of Examples 1 to 3 and Comparative Examples 1 to 3, the film containing an aluminum-containing compound was found to be formed over at least a part of the negative electrode active material-containing layer.

These results are summarized in Table 1 below.

In Table 1, the column headed by "$ZnCl_2$" represents concentration, in % by weight, of $ZnCl_2$ contained in the electrolyte. The column headed by "$Zn^{2+}$" represents concentration, in % by weight, of $Zn^{2+}$ contained in the electrolyte. The column headed by "$Zn^{2+}$/heterocyclic compound" represents ratio by weight of zinc ions and heterocyclic compound contained in the electrolyte. The column headed by "Al/(Al+Ti)" represents proportion ({Al atom concentration/(Al atom concentration + Ti atom concentration)} × 100) determined by the SEM-EDX analysis. The column headed by "Charge-and-Discharge Efficiency" represents charge-and-discharge efficiency, in percentage, at the 20th cycle measured by the aforementioned constant current charge-and-discharge test. The column headed by "Discharge capacity" represents discharge capacity at the 20th cycle, measured by the aforementioned constant current charge-and-discharge test. "NA" represents that the secondary battery did not operate normally before the 20th cycle.

[Table 1]

| Table 1 | $ZnCl_2$ (wt%) | $Zn^{2+}$ (wt%) | Heterocyclic compound | | $Zn^{2+}$ / Heterocyclic compound (ratio by weight) | Al/ (Al+Ti) (atm%) | Charge-and-discharge efficiency (%) | Discharge capacity (mAh /g) |
|---|---|---|---|---|---|---|---|---|
| | | | Type | Content (wt%) | | | | |
| Example 1 | 0.9 | 0.43 | Benzotriazole | 0.1 | 4.3 | 38 | 98.6 | 154 |

(continued)

| Table 1 | $ZnCl_2$ (wt%) | $Zn^{2+}$ (wt%) | Heterocyclic compound | | $Zn^{2+}$ / Heterocyclic compound (ratio by weight) | Al/ (Al+Ti) (atm%) | Charge-and-discharge efficiency (%) | Discharge capacity (mAh /g) |
|---|---|---|---|---|---|---|---|---|
| | | | Type | Content (wt%) | | | | |
| Example 2 | 0.5 | 0.24 | Benzotriazole | 0.5 | 0.48 | 14 | 98.4 | 139 |
| Example 3 | 4.95 | 2.4 | Benzotriazole | 0.01 | 240 | 5.7 | 96.8 | 152 |
| Comparative Example 1 | 1 | 0.48 | Benzotriazole | 0 | - | 58 | 94.2 | 136 |
| Comparative Example 2 | 0.1 | 0.05 | Benzotriazole | 0.5 | 0.1 | 2.6 | 77 | 26.7 |
| Comparative Example 3 | 5 | 2.4 | Benzotriazole | 0.005 | 480 | 2.8 | NA* | NA* |

*: Not operable beyond the 6th cycle.

Table 1 teaches the following.

Examples 1 to 3, having the ratio by weight of zinc ions and the heterocyclic compound within the range from 0.4 to 240 in the aqueous electrolyte, successfully achieved excellent charge-and-discharge efficiency. Among them, Examples 1 and 2, having the ratio by weight within the range from 0.4 to 10, achieved especially excellent charge-and-discharge efficiency.

In contrast, Comparative Example 1 having the aqueous electrolyte free of heterocyclic compound, and Comparative Examples 2 and 3, having the ratio by weight of zinc ion and the heterocyclic compound out of the range from 0.4 to 240, were found to be inferior both in the charge-and-discharge efficiency and discharge capacity.

As shown in Examples 1 to 3, excellent charge-and-discharge efficiency are demonstrated when the proportion of atomic concentration of aluminum atom relative to a total atomic concentration of titanium atom and aluminum atom ({Al atom concentration/(Al atom concentration + Ti atom concentration)} $\times$ 100) is within the range from 5 atm% to 40 atm% on the surface of the negative electrode active material-containing layer.

As shown in Comparative Example 2, the charge-and-discharge efficiency distinctively is degraded when the ratio by weight of zinc ions and the heterocyclic compound in the aqueous electrolyte is smaller than 0.4. This is presumably because the amount of formation of the hydrophobic film that contains the heterocyclic compound and the composite film that contains the zinc-containing compound and the heterocyclic compound are insufficient, and therefore the water decomposition on the surface of the current collector are not suppressed.

As shown in Comparative Example 3, excessive amount of zinc ions allows zinc to elute and deposit preferentially, and thereby deposition of zinc on the active material-containing layer and/or on the current collector are inhibited. The zinc-containing film therefore failed to demonstrate the effect of suppressing electrolysis of water, and the charge-and-discharge efficiency of the battery is degraded, possibly making the battery unable to operate stably. Accordingly, the secondary battery could not be operated beyond the 6th cycle, as listed in Table 1.

According to at least one of the aforementioned approaches and Examples, a secondary battery is provided. The secondary battery includes a negative electrode, a positive electrode, and an aqueous electrolyte. The negative electrode includes an aluminum-containing negative electrode current collector, and a negative electrode active material-containing layer provided on the negative electrode current collector and containing a titanium-containing oxide. At least a part of the surface of the negative electrode active material-containing layer has a film containing an aluminum-containing compound. The aqueous electrolyte contains zinc ions, and a heterocyclic compound of formula (A) containing aromatic rings and heteroatoms. The weight ratio of zinc ions to the heterocyclic compound in the aqueous electrolyte is within the range from 0.4 to 250. Such a secondary battery can suppress electrolysis of water at the negative electrode, and can thereby demonstrate excellent charge-and-charge efficiency.

## Claims

**1.** A secondary battery (100) comprising:

a negative electrode (3) comprising an aluminum-containing negative electrode current collector (3a), and a negative electrode active material-containing layer (3b) provided on the negative electrode current collector (3a)

and containing a titanium-containing oxide;
a positive electrode (5); and
an aqueous electrolyte,
wherein at least a part of a surface of the negative electrode active material-containing layer (3b) comprises a film (50) containing an aluminum-containing compound,
the aqueous electrolyte comprises zinc ions, and a heterocyclic compound comprising an aromatic ring and a heteroatom,
a weight ratio of the zinc ions to the heterocyclic compound in the aqueous electrolyte is within a range from 0.4 to 250, and
the heterocyclic compound is represented by formula (A) below:
Formula (A)

[Chemical Formula 1]

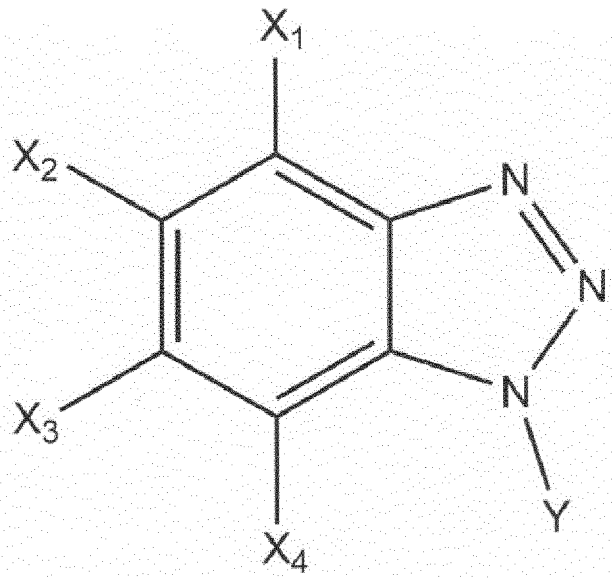

in formula (A), each of $X_1$ to $X_4$ is a hydrogen atom, alkyl group or carboxy group, and Y is a hydrogen atom or alkoxy group.

2. The secondary battery (100) according to claim 1, wherein on the surface of the negative electrode active material-containing layer (3b), a proportion of an atomic concentration of aluminum atom to a total atomic concentration of titanium atom and aluminum atom ({Al atom concentration/(Al atom concentration + Ti atom concentration)} $\times$ 100) is within a range from 5 atm% to 40 atm%.

3. The secondary battery (100) according to claim 1 or 2, wherein a concentration of the zinc ions in the aqueous electrolyte is within a range from 0.2% by weight to 3% by weight.

4. The secondary battery (100) according to any one of claims 1 to 3, wherein a concentration of the heterocyclic compound in the aqueous electrolyte is within a range from 0.01% by weight to 0.5% by weight.

5. The secondary battery (100) according to any one of claims 1 to 4, wherein pH of the aqueous electrolyte is smaller than 7.

6. A battery pack (300) comprising the secondary battery (100) according to any one of claims 1 to 5.

7. The battery pack (300) according to claim 6, further comprising an external power distribution terminal (347) and a protective circuit (344).

8. The battery pack (300) according to claim 6 or 7, comprising a plurality of the secondary battery (100),
wherein the secondary batteries (100) are electrically connected in series, in parallel, or in a combination of series

connection and parallel connection.

**9.** A vehicle (400) comprising the battery pack (300) according to any one of claims 6 to 8.

**10.** A stationary power supply (112) comprising the battery pack (300) according to any one of claims 6 to 8.

**Patentansprüche**

**1.** Sekundärbatterie (100), umfassend:

eine negative Elektrode (3), umfassend einen aluminiumhaltigen Negativelektrodenstromkollektor (3a) und eine Negativelektrodenaktivmaterial enthaltende Schicht (3b), die auf dem Negativelektrodenstromkollektor (3a) angeordnet ist und ein titanhaltiges Oxid enthält;
eine positive Elektrode (5); und
einen wässrigen Elektrolyten,
wobei mindestens ein Teil einer Oberfläche der Negativelektrodenaktivmaterial enthaltenden Schicht (3b) einen Film (50) umfasst, der eine aluminiumhaltige Verbindung enthält,
der wässrige Elektrolyt Zinkionen und eine heterocyclische Verbindung, umfassend einen aromatischen Ring und ein Heteroatom, umfasst,
ein Gewichtsverhältnis von den Zinkionen zu der heterocyclischen Verbindung in dem wässrigen Elektrolyten im Bereich von 0,4 bis 250 liegt, und
die heterocyclische Verbindung durch die nachstehende Formel (A) dargestellt wird:
Formel (A)

[Chemische Formel 1]

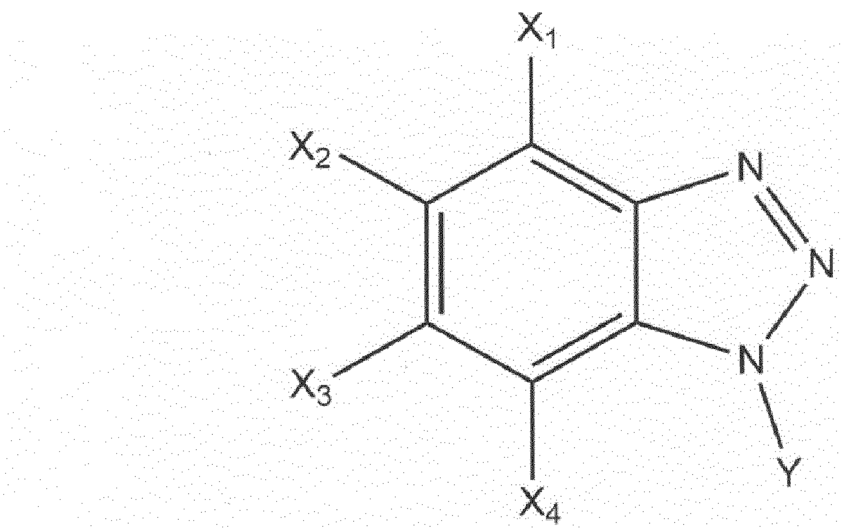

wobei in Formel (A) jedes von $X_1$ bis $X_4$ ein Wasserstoffatom, eine Alkylgruppe oder eine Carboxygruppe ist und Y ein Wasserstoffatom oder eine Alkoxygruppe ist.

**2.** Sekundärbatterie (100) gemäß Anspruch 1, wobei auf der Oberfläche der Negativelektrodenaktivmaterial enthaltenden Schicht (3b) ein Anteil einer Atomkonzentration von Aluminiumatomen an der Gesamtatomkonzentration von Titanatomen und Aluminiumatomen ({Al-Atomkonzentration/(Al-Atomkonzentration + Ti-Atomkonzentration)} × 100) im Bereich von 5 Atom-% bis 40 Atom-% liegt.

**3.** Sekundärbatterie (100) gemäß Anspruch 1 oder 2, wobei eine Konzentration der Zinkionen in dem wässrigen Elektrolyten im Bereich von 0,2 Gew.-% bis 3 Gew.-% liegt.

**4.** Sekundärbatterie (100) gemäß einem der Ansprüche 1 bis 3, wobei eine Konzentration der heterocyclischen Verbindung in dem wässrigen Elektrolyten im Bereich von 0,01 Gew.-% bis 0,5 Gew.-% liegt.

5. Sekundärbatterie (100) gemäß einem der Ansprüche 1 bis 4, wobei der pH-Wert des wässrigen Elektrolyten kleiner als 7 ist.

6. Batteriepack (300), umfassend die Sekundärbatterie (100) gemäß einem der Ansprüche 1 bis 5.

7. Batteriepack (300) gemäß Anspruch 6, ferner umfassend einen externen Stromverteilungsanschluss (347) und eine Schutzschaltung (344).

8. Batteriepack (300) gemäß Anspruch 6 oder 7, umfassend mehrere der Sekundärbatterien (100), wobei die Sekundärbatterien (100) elektrisch in Reihe, parallel oder in einer Kombination aus Reihen- und Parallelschaltung geschaltet sind.

9. Fahrzeug (400), umfassend den Batteriepack (300) gemäß einem der Ansprüche 6 bis 8.

10. Stationäre Stromversorgung (112), umfassend den Batteriepack (300) gemäß einem der Ansprüche 6 bis 8.

**Revendications**

1. Batterie secondaire (100) comprenant :

une électrode négative (3) comprenant un collecteur de courant (3a) d'électrode négative contenant de l'aluminium et une couche (3b) contenant un matériau actif d'électrode négative disposé sur le collecteur de courant (3a) d'électrode négative et contenant un oxyde contenant du titane ;
une électrode positive (5) ; et
un électrolyte aqueux,
dans lequel au moins une partie d'une surface de la couche (3b) contenant un matériau actif d'électrode négative comprend un film (50) contenant un composé contenant de l'aluminium,
l'électrolyte aqueux comprend des ions zinc, et un composé hétérocyclique comprenant un anneau aromatique et un hétéroatome,
un ratio pondéral des ions zinc par rapport au composé hétérocyclique dans l'électrolyte aqueux est compris dans une plage de 0,4 à 250, et
le composé hétérocyclique est représenté par la formule (A) ci-dessous :
Fomule (A)

[Formule chimique 1]

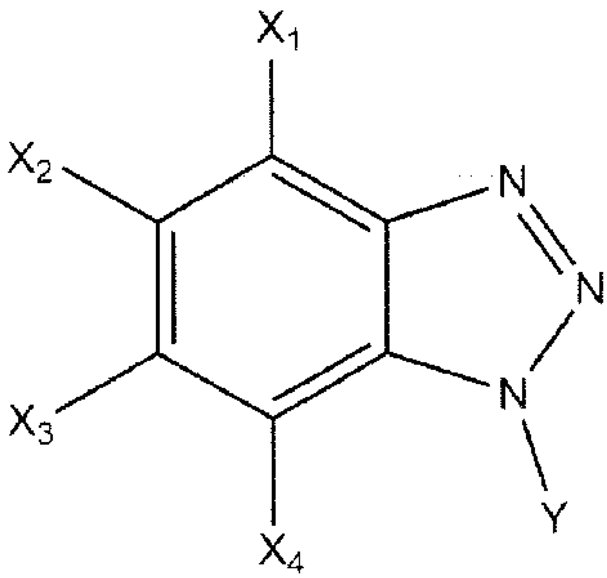

dans la formule (A), chacun de $X_1$ à $X_4$ est un atome d'hydrogène, un groupe alkyle ou un groupe carboxy, et Y est un atome d'hydrogène ou un groupe alkoxy.

2. Batterie secondaire (100) selon la revendication 1, dans laquelle, sur la surface de la couche (3b) contenant le matériau actif d'électrode négative, une proportion de la concentration atomique en atomes d'aluminium par rapport à la concentration atomique totale en atomes de titane et en atomes d'aluminium ({concentration en atomes d'Al/(-concentration en atomes d'Al + concentration en atomes de Ti)} × 100) est comprise dans une plage de 5 % en atomes à 40 % en atomes.

3. Batterie secondaire (100) selon la revendication 1 ou 2, dans laquelle une concentration des ions zinc dans l'électrolyte aqueux est comprise dans une plage de 0,2% en poids à 3% en poids.

4. Batterie secondaire (100) selon l'une quelconque des revendications 1 à 3, dans laquelle une concentration du composé hétérocyclique dans l'électrolyte aqueux est comprise dans une plage de 0,01% en poids à 0,5% en poids.

5. Batterie secondaire (100) selon l'une quelconque des revendications 1 à 4, dans laquelle le pH de l'électrolyte aqueux est inférieur à 7.

6. Bloc-batterie (300) comprenant la batterie secondaire (100) selon l'une quelconque des revendications 1 à 5.

7. Bloc-batterie (300) selon la revendication 6, comprenant en outre une borne externe (347) de distribution de puissance et un circuit protecteur (344).

8. Bloc-batterie (300) selon la revendication 6 ou 7, comprenant une pluralité de la batterie secondaire (100), dans lequel les batteries secondaires (100) sont électriquement connectées en série, en parallèle, ou en une combinaison de connexion en série et en parallèle.

9. Véhicule (400) comprenant le bloc-batterie (300) selon l'une quelconque des revendications 6 à 8.

10. Alimentation électrique stationnaire (112) comprenant le bloc-batterie (300) selon l'une quelconque des revendications 6 à 8.

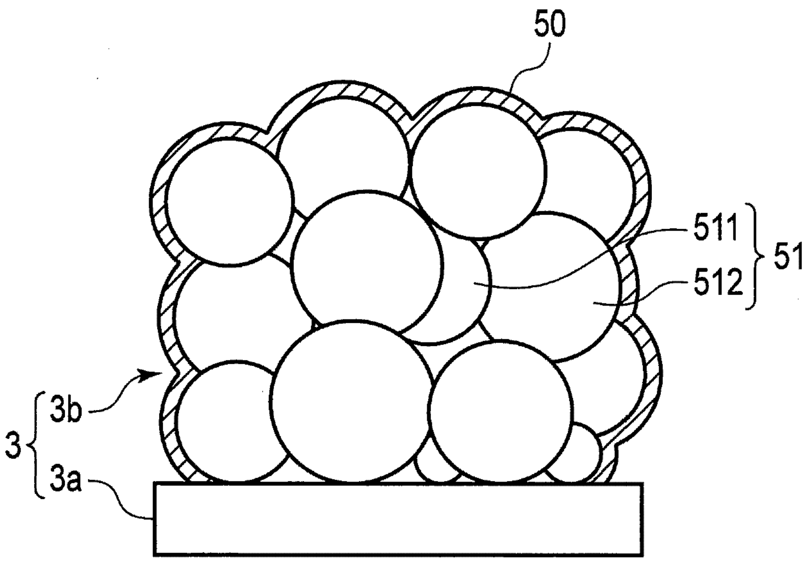


FIG. 1

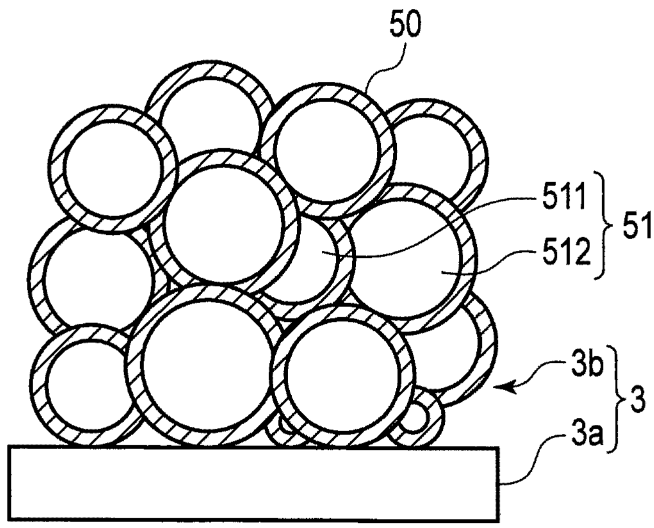


FIG. 2

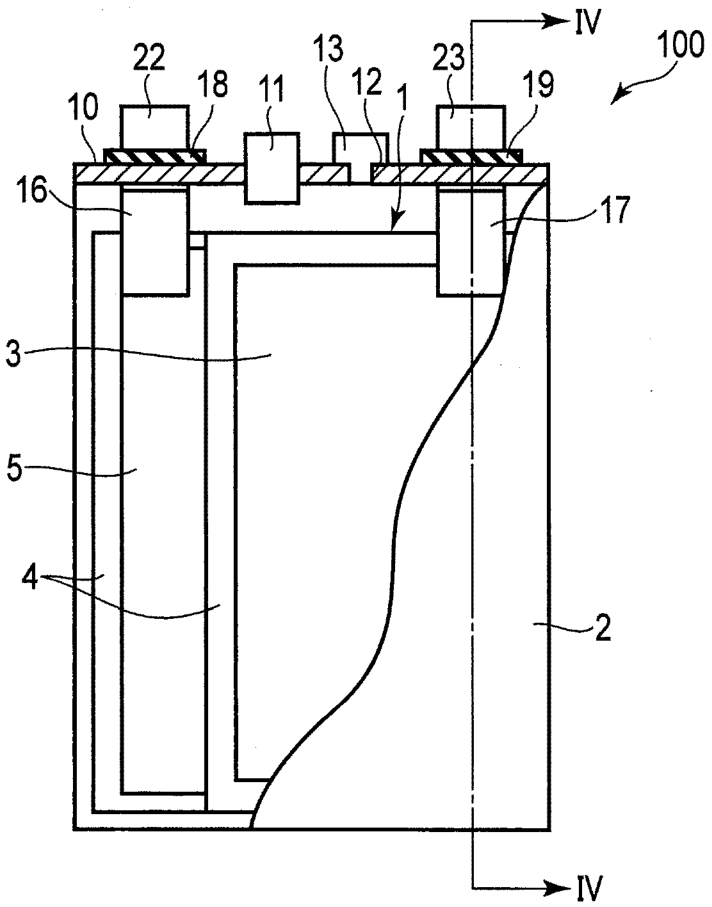


FIG. 3

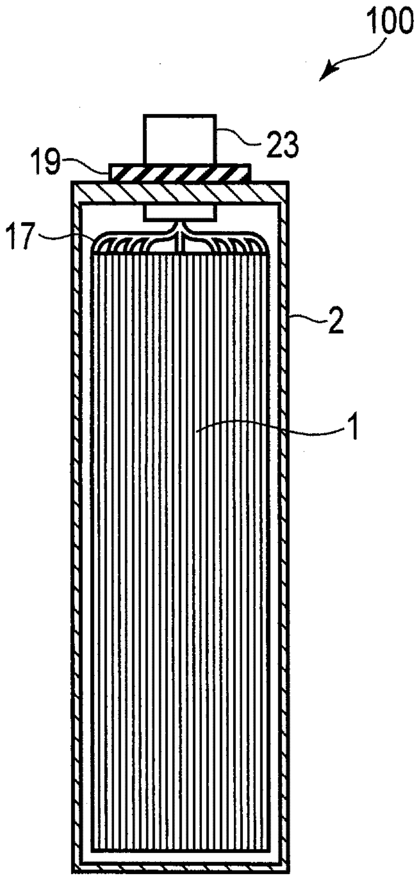


F I G. 4

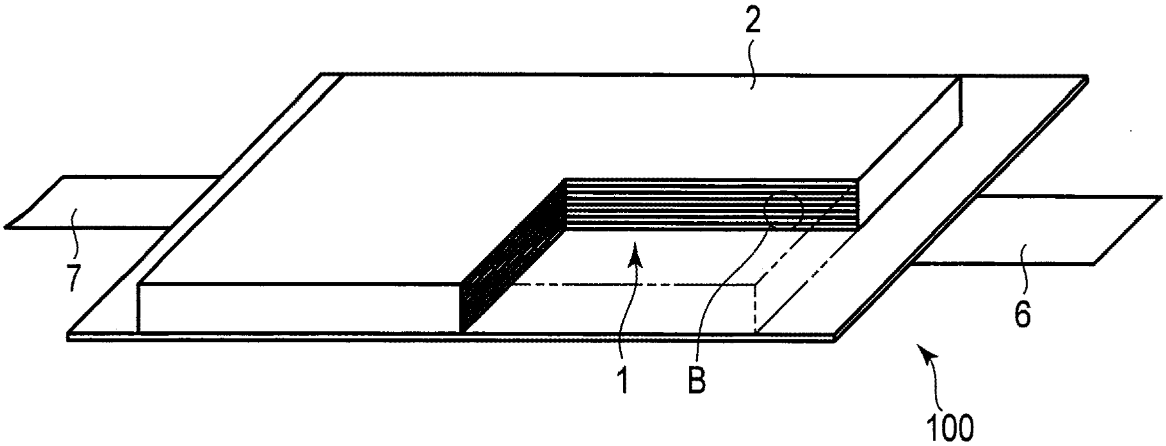


F I G. 5

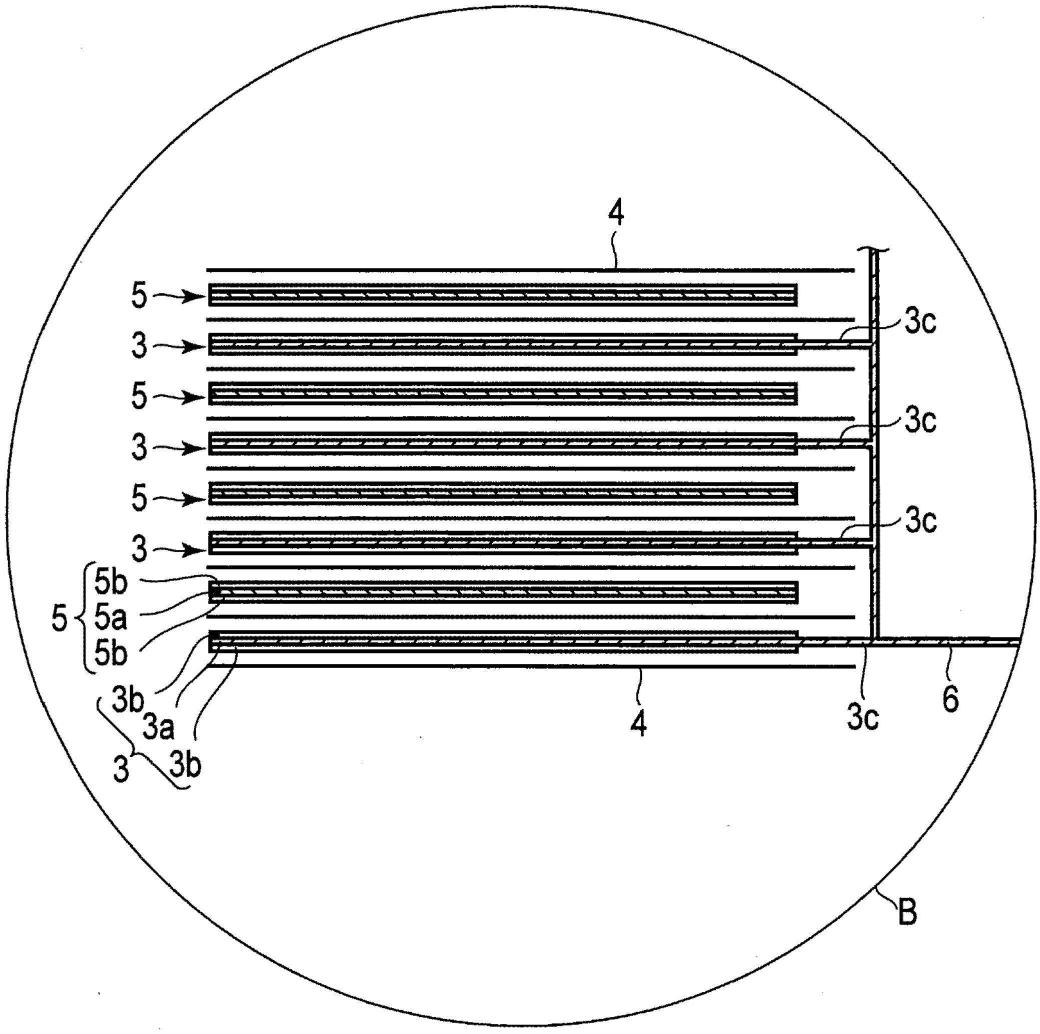


F I G. 6

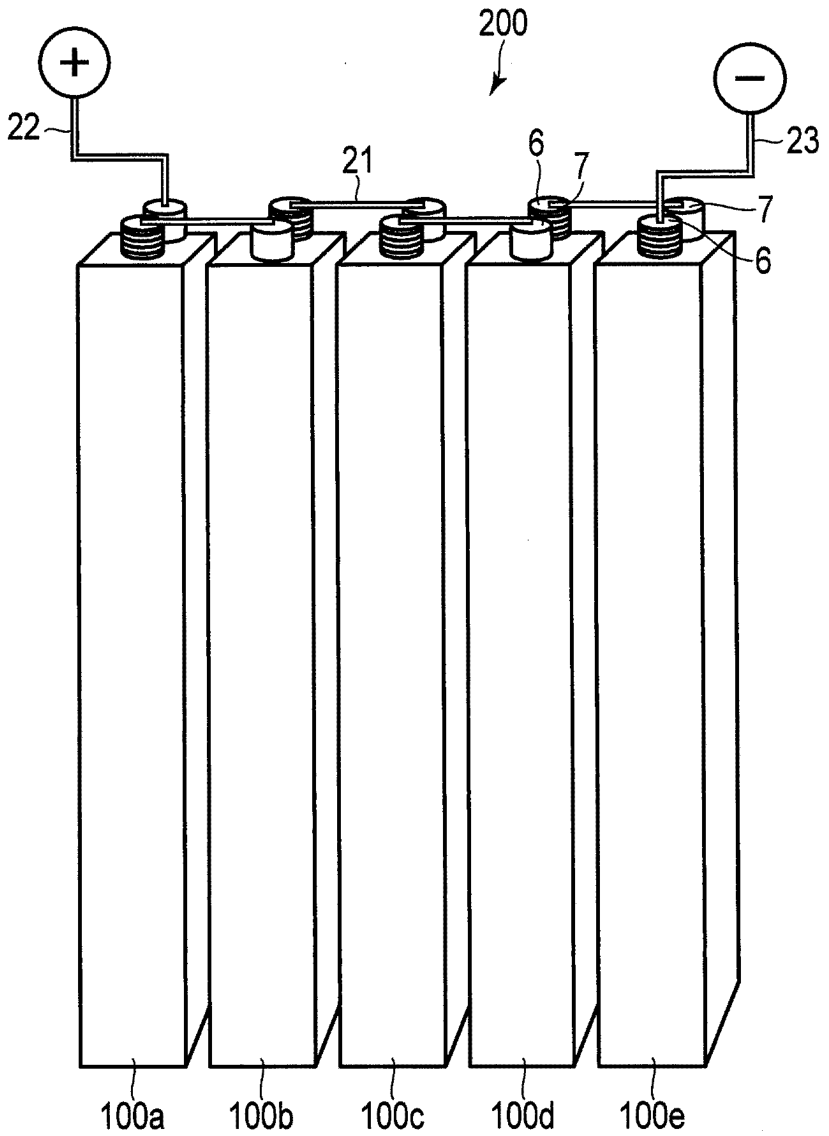


FIG. 7

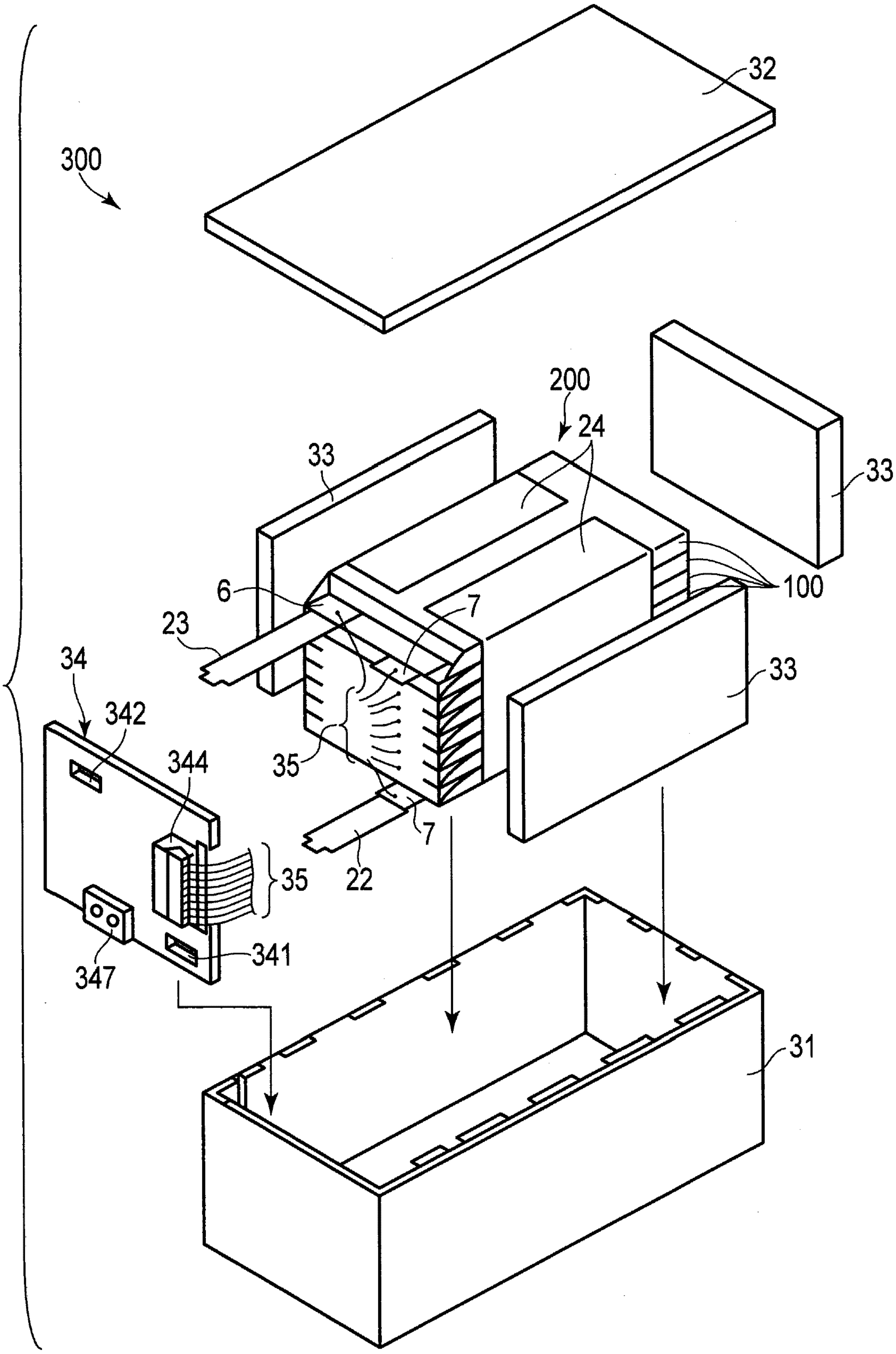


FIG. 8

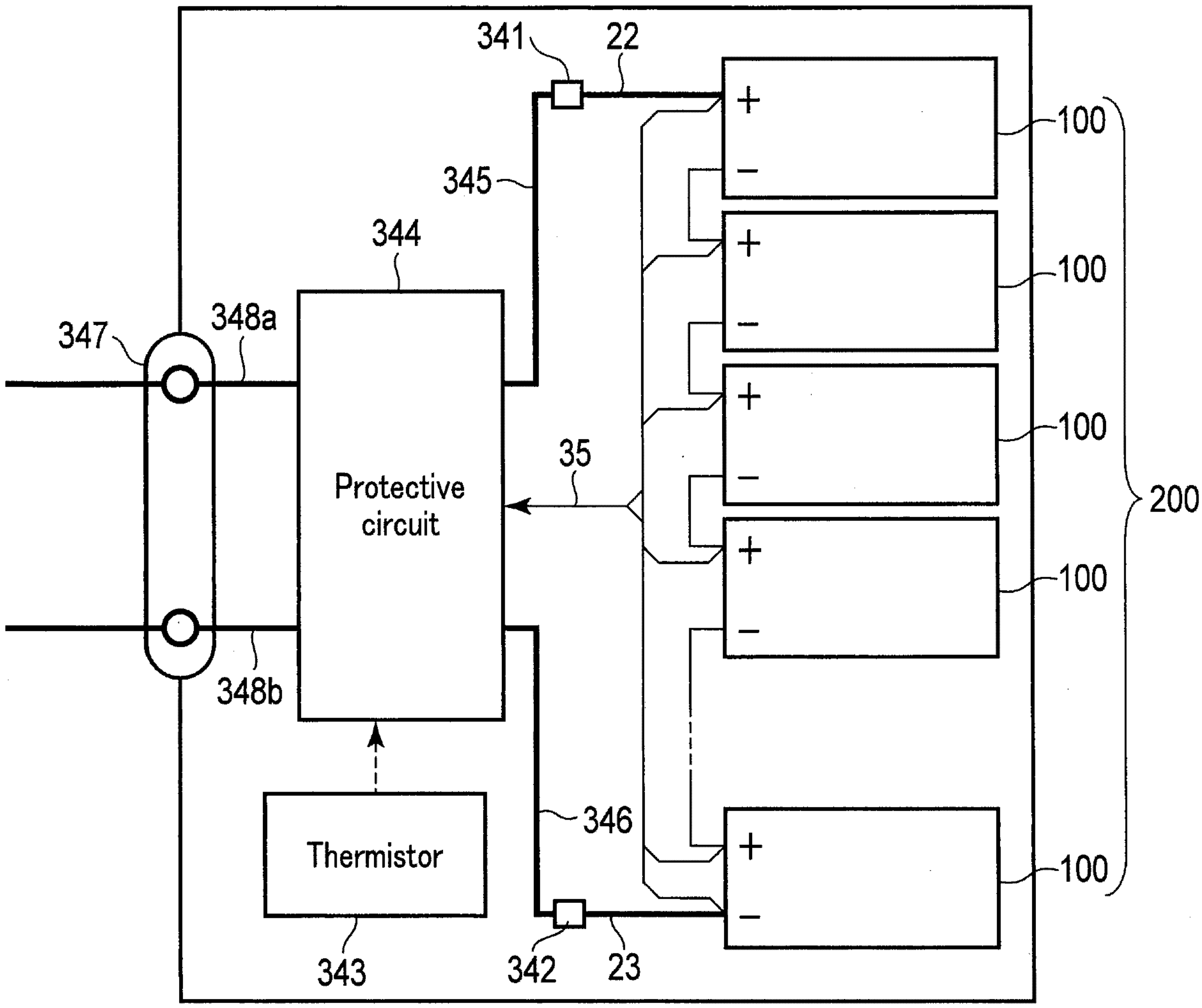
341
22
100
345
344
347
348a
100
100
35
Protective circuit
200
100
348b
346
Thermistor
100
343
342
23

F I G. 9

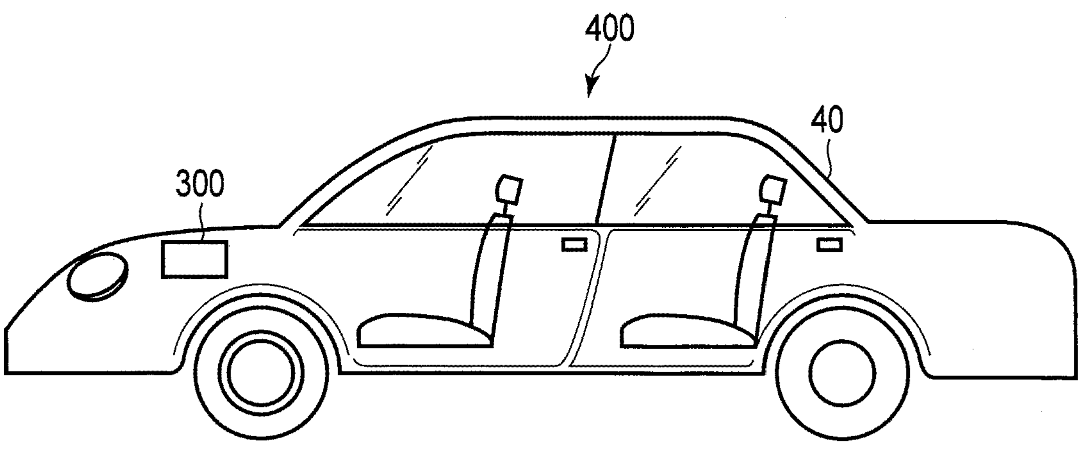
400
40
300

F I G. 10

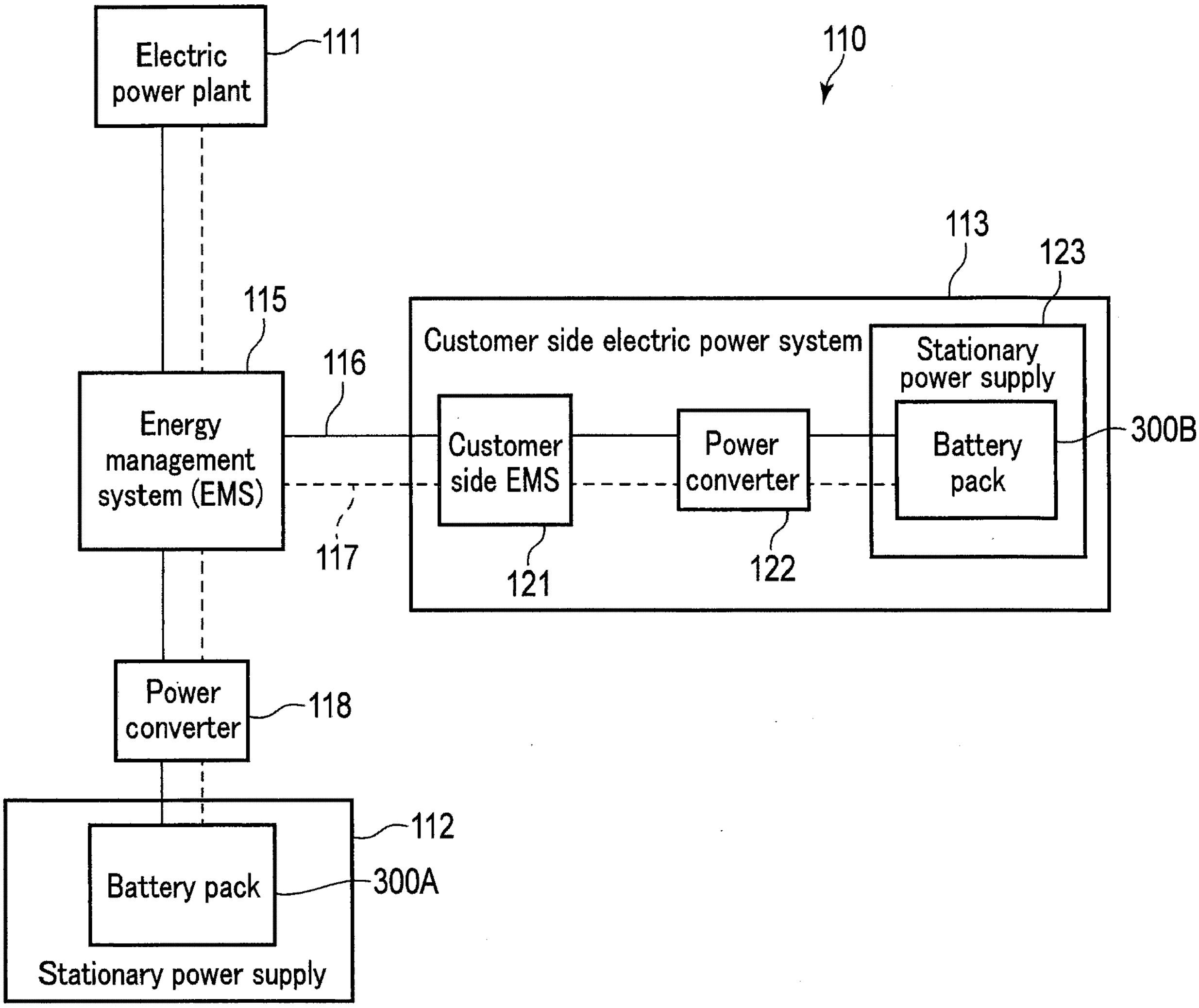
Electric power plant
111
110
113
123
115
Customer side electric power system
Stationary power supply
116
Energy management system (EMS)
Customer side EMS
Power converter
Battery pack
300B
117
121
122
Power converter
118
112
Battery pack
300A
Stationary power supply

F I G. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3544096 A1
- EP 3460900 A1
- EP 3413391 A1